# EUROPEAN PATENT APPLICATION

(11) **EP 4 797 560 A1**
(43) Date of publication of application: **26.08.2026**
(21) Application number: 24887876.1
(22) Date of filing: 01.11.2024
(51) Int. Cl.: H04B 7/08

(54) **BEAM ALIGNMENT METHOD AND APPARATUS**

(30) Priority: 10.11.2023 CN 202311497950
(71) Applicant: HUAWEI TECHNOLOGIES CO., LTD., Shenzhen, Guangdong 518129 (CN)
(72) Inventor: ZHANG, Maolin, Shenzhen, Guangdong 518129 (CN); LI, Yunbo, Shenzhen, Guangdong 518129 (CN)
(74) Representative: Thun, Clemens
(86) International application number: PCT/CN2024/129390
(87) International publication number: WO 2025/098264

(57) **Abstract**

This application provides a beam alignment method. The method may be applied to a WLAN system that supports 802.11 series protocols such as IEEE 802.11 ax (Wi-Fi 6), 802.11be (Wi-Fi 7) or 802.11bn (Wi-Fi 8), and may be further applied to another wireless protocol, standard, and wireless communication system that have a beam alignment phase. The method includes: A first station obtains first information, where the first information indicates a first beam group and a second beam group, and obtains a first measurement result of the first beam group and a second measurement result of the second beam group based on the first information, where the first measurement result and the second measurement result are used to determine a target beam used for beam alignment, and are further used to determine stopping of beam measurement. To-be-measured beams are grouped, so that the first station can stop beam measurement in a measurement process, thereby reducing beam training overheads.

## Description

This application claims priority to Chinese Patent Application No. 202311497950.5, filed with the China National Intellectual Property Administration on November 10, 2023 and entitled "BEAM ALIGNMENT METHOD AND APPARATUS", which is incorporated herein by reference in its entirety.

### TECHNICAL FIELD

This application relates to the field of communication technologies, and more specifically, to a beam alignment method and an apparatus.

### BACKGROUND

In high-frequency communication, such as high-frequency standards (45 GHz or above) like 802.11ad and 802.11ay standards running near 60 GHz and an integrated millimeter wave (Integrated mmWave) in Wi-Fi 8, a high operating frequency causes a large path loss when a signal is transmitted in space. To increase a communication distance, two communication devices may perform beamforming and beam alignment before communication, to find a good communication link.

To determine a beam direction used for beam alignment, generally, the communication device needs to perform exhaustive and undifferentiated beam scanning in a specific range (for example, a coverage range), and determine, based on a measurement result of each beam, a beam used for beam alignment. This beam alignment process causes a large quantity of beam training overheads.

### SUMMARY

This application provides a beam alignment method and an apparatus, to reduce beam training overheads caused in a beam alignment process.

According to a first aspect, a beam alignment method is provided. The method may be performed by a first station, or may be performed by a component (for example, a chip or a circuit) of a first station. This is not limited. For ease of description, the following uses an example in which the first station performs the method for description.

The method includes: obtaining first information, where the first information indicates a first beam group and a second beam group; and obtaining a first measurement result of the first beam group and a second measurement result of the second beam group based on the first information, where the first measurement result and the second measurement result are used to determine a target beam used for beam alignment, and are further used to determine stopping of beam measurement.

Based on this technical solution, in a beam alignment process, the first station does not perform exhaustive and undifferentiated beam measurement, but groups to-be-measured beams, and determines a target beam and stopping of beam measurement based on a measurement result of a beam group. In other words, because the to-be-measured beams are grouped into a plurality of beam groups, the first station can learn, in a measurement process, whether beam measurement can be stopped. If the first station learns, in the measurement process, that beam measurement can be stopped, the first station may not continue to measure a remaining to-be-measured beam, thereby reducing beam training overheads in a beam alignment process.

For example, the first station receives the first information, where the first information indicates the first beam group and the second beam group; and the first station obtains the first measurement result of the first beam group and the second measurement result of the second beam group, determines, based on the first measurement result and the second measurement result, the target beam used for beam alignment, and determines stopping of beam measurement.

For another example, the first station receives the first information, where the first information indicates the first beam group and the second beam group; the first station obtains the first measurement result of the first beam group and the second measurement result of the second beam group; and the first station sends third information to a second station based on the first measurement result and the second measurement result, where the third information is used to determine the target beam used for beam alignment, and is further used to determine stopping of beam measurement.

For still another example, the first station generates the first information, where the first information indicates the first beam group and the second beam group; the first station sends the first information; and the first station obtains the first measurement result of the first beam group and the second measurement result of the second beam group, determines, based on the first measurement result and the second measurement result, the target beam used for beam alignment, and determines stopping of beam measurement.

For still another example, the first station generates the first information, where the first information indicates the first beam group and the second beam group; the first station sends the first information; the first station obtains the first measurement result of the first beam group and the second measurement result of the second beam group; and the first station sends third information to a second station based on the first measurement result and the second measurement result, where the third information is used to determine the target beam used for beam alignment, and is further used to determine stopping of beam measurement.

With reference to the first aspect, in some implementations, the first measurement result indicates receiving quality of a first beam in the first beam group, and the second measurement result indicates receiving quality of a first beam in the second beam group; and when receiving quality of all first beams in the second beam group is not higher than receiving quality of a first beam with highest quality in the first beam group, beam measurement is stopped, where the first beam group and the second beam group include the target beam.

Based on this technical solution, measurement results of two groups are compared. When the measurement results of the two groups meet a specific condition, it may be determined that beam measurement is stopped, and the first station may not continue to measure a remaining to-be-measured beam, thereby reducing beam training overheads in a beam alignment process.

With reference to the first aspect, in some implementations, the method further includes: sending second information, where the second information indicates that beam measurement is stopped.

Based on this technical solution, the first station may indicate a second station that beam measurement is stopped, so that the second station may stop sending a remaining to-be-sent first frame, thereby reducing beam training overheads in a beam alignment process.

With reference to the first aspect, in some implementations, the second information further indicates the target beam.

Based on this technical solution, the first station determines the target beam, and a second station may implement beam alignment based on the target beam.

With reference to the first aspect, in some implementations, the method further includes: sending third information based on the first measurement result and the second measurement result, where the third information is used to determine the target beam used for beam alignment, and is further used to determine stopping of beam measurement.

Based on this technical solution, the first station may feed back a measurement result, and a second station determines the target beam.

With reference to the first aspect, in some implementations, the first beam group and the second beam group are obtained through grouping based on one or more of the following information: location information of the first station, location information of the second station, historical data of communication between the first station and the second station, historical beam alignment directions of the first station and the second station, a type of the first station, a type of the second station, or an environment of communication between the first station and the second station, where the target beam is used for beam alignment between the first station and the second station.

Based on this technical solution, the first beam group and the second beam group may be determined based on various prior information, thereby improving reliability of beam grouping, and improving beam alignment efficiency.

With reference to the first aspect, in some implementations, the first beam group and the second beam group are beam groups in L beam groups, and the L beam groups are obtained by grouping N first beams.

For example, the first beam group and the second beam group are two beam groups that are adjacently sent in the L beam groups.

With reference to the first aspect, in some implementations, the first information indicates one or more of the following: a manner of grouping the N first beams into the L beam groups, identifiers of the L beam groups, identifiers of the N first beams, measurement duration of the L beam groups, measurement duration of a last beam group in the L beam groups, measurement start time of the L beam groups, whether the first station and the second station are in a line-of-sight LOS scenario, whether the N first beams are grouped into the L beam groups, whether to feed back measurement results of the L beam groups, types of the fed-back measurement results of the L beam groups, and whether to enable transmission on a first communication link, where the L beam groups are transmitted on the first communication link, and a frequency band on which the first communication link operates is higher than or equal to a first threshold.

For example, the types of the fed-back measurement results of the L beam groups include one or more of the following: an RSSI of a first beam and a corresponding beam ID, an RSSI of a first beam with a highest RSSI in the beam group and a corresponding beam ID, first Q higher-ranking RSSIs in the beam group and corresponding beam IDs, or a beam ID that is decided by the first station and that is used for beam alignment.

Based on this technical solution, the first information may indicate the L beam groups in a plurality of manners, so that a receiver device of the first information can perform beam measurement based on the first information.

In addition, before beam measurement, the first station obtains the L beam groups based on the first information. A grouping manner of aligning the L beam groups between the first station and the second station through less interaction can reduce beam training overheads.

With reference to the first aspect, in some implementations, the first information indicates the first station to start measurement of the first beam group and measurement of the second beam group.

For example, each time before sending a first frame corresponding to one beam group, the second station may send one piece of first information to the first station, to indicate the first station to start measurement of the beam group. In this way, the first station can reliably group measurement results, thereby improving beam measurement reliability.

With reference to the first aspect, in some implementations, the N first beams are beams in a target space, the target space is divided into L subspaces, and the L beam groups respectively include beams in the L subspaces.

Based on this technical solution, the first station may measure the beams in the target space, instead of measuring all beams in an entire coverage range, so that beam training overheads caused by beam alignment can be reduced.

With reference to the first aspect, in some implementations, the target space is a cone, and when the N first beams are transmission beams of the second station, a vertex of the cone is located at the second station, or when the N first beams are reception beams of the first station, a vertex of the cone is located at the first station; and the cone is divided into the L subspaces by L-1 cone surfaces, where a vertex of the L-1 cone surfaces is located at the vertex of the cone, opening angles of the L-1 cone surfaces increase sequentially, a 1^{st} subspace in the L subspaces is a cone enclosed by a 1^{st} cone surface in the L-1 cone surfaces, a j^{th} subspace in the L subspaces is a space enclosed by a j^{th} cone surface and a (j-1)^{th} cone surface in the L-1 cone surfaces, and j≥2.

Based on this technical solution, the N first beams may be grouped in sequence in a direction from a center to an edge, and a probability that a target beam appears in a beam group arranged in front is higher than a probability that the target beam appears in a beam group arranged in back. In other words, a probability that the target beam appears in the first beam group is the highest, and a probability that the target beam appears in a subsequent beam group decreases sequentially. Therefore, beam alignment efficiency is improved.

With reference to the first aspect, in some implementations, a k^{th} beam group in the L beam groups is determined based on a measurement result of at least one beam group in first k-1 beam groups in the L beam groups, where k≥2.

With reference to the first aspect, in some implementations, the target space is an elliptic cone, and when the N first beams are transmission beams of the second station, a vertex of the elliptic cone is located at the second station, or when the N first beams are reception beams of the first station, a vertex of the elliptic cone is located at the first station; and the elliptic cone is divided into the L subspaces by L-1 elliptic cone surfaces, where a vertex of the L-1 elliptic cone surfaces is located at the vertex of the elliptic cone, opening angles of the L-1 elliptic cone surfaces increase sequentially, a 1^{st} subspace in the L subspaces is an elliptic cone enclosed by a 1^{st} elliptic cone surface in the L-1 elliptic cone surfaces, a k^{th} subspace in the L subspaces is a space enclosed by a k^{th} elliptic cone surface and a (k-1)^{th} elliptic cone surface in the L-1 elliptic cone surfaces, and j≥2.

With reference to the first aspect, in some implementations, a probability that the target beam used for beam alignment exists in an i^{th} beam group in the L beam groups is greater than or equal to a probability that the target beam exists in an (i+1)^{th} beam group in the L beam groups, where L-1≥i≥1.

With reference to the first aspect, in some implementations, the N first beams are determined based on one or more of the following information: the location information of the first station, the location information of the second station, the historical data of communication between the first station and the second station, the historical beam alignment directions of the first station and the second station, the type of the first station, the type of the second station, or the environment of communication between the first station and the second station.

Based on this technical solution, the first station may determine the N first beams based on prior information, instead of measuring all beams in an entire coverage range, so that beam training overheads caused by beam alignment can be reduced.

With reference to the first aspect, in some implementations, the N first beams are the beams in the target space, and the target space is the cone or the elliptic cone; and when the N first beams are the transmission beams of the second station, a vertex of the target space is located at the second station, and a direction from the vertex of the target space to a bottom surface center is a direction from a location of the second station to a location of the first station; or when the N first beams are the reception beams of the first station, a vertex of the target space is located at the first station, and a direction from the vertex of the target space to a bottom surface center is a direction from a location of the first station to a location of the second station.

With reference to the first aspect, in some implementations, the first station and the second station are in the line-of-sight LOS scenario.

With reference to the first aspect, in some implementations, the method further includes: obtaining third measurement results of M second beams, where the third measurement results indicate first S second beams with highest receiving quality in the M second beams, the N first beams are the beams in the target space, the target space is determined based on a space to which the first S second beams belong, and a lobe width of the second beam is greater than a lobe width of the first beam.

Based on this technical solution, the first station may determine the N first beams based on a measurement result of a second beam with a wider beam width, instead of measuring all beams in an entire coverage range, so that beam training overheads caused by beam alignment can be reduced.

With reference to the first aspect, in some implementations, the method further includes: receiving fourth information, and determining, based on a shortest path signal component of the fourth information, whether the first station and the second station are in the line-of-sight LOS scenario.

With reference to the first aspect, in some implementations, the fourth information is further used to determine the location information of the first station.

With reference to the first aspect, in some implementations, the method further includes: obtaining a fourth measurement result of a third beam, where the fourth measurement result is used to determine whether the first station and the second station are in the line-of-sight LOS scenario, the third beam is transmitted on the first communication link, the frequency band on which the first communication link operates is higher than or equal to the first threshold, and a direction of the third beam is a direction from the first station to the second station, or a direction of the third beam is a direction from the second station to the first station.

With reference to the first aspect, in some implementations, when a beam in the first beam group is the transmission beam of the second station, a frame corresponding to the beam in the first beam group is directionally received by the first station; or when a beam in the first beam group is the reception beam of the first station, a frame corresponding to the beam in the first beam group is directionally sent by the second station.

Based on this technical solution, the first station performs directional receiving or the second station performs directional sending, and the first station or the second station may not need to traverse a plurality of directions to receive or send a first frame, thereby further reducing beam training overheads in a beam alignment process.

With reference to the first aspect, in some implementations, a directional receiving direction of the first station or a directional sending direction of the second station is determined based on one or more of the following information: the location information of the first station, the location information of the second station, the historical data of communication between the first station and the second station, the historical beam alignment directions of the first station and the second station, the type of the first station, the type of the second station, or the environment of communication between the first station and the second station.

With reference to the first aspect, in some implementations, the method further includes: determining whether the first station and the second station are in the line-of-sight LOS scenario; and when the first station and the second station are in the line-of-sight LOS scenario, determining to group the N first beams into the L beam groups.

With reference to the first aspect, in some implementations, sending the first information includes: sending the first information on a second communication link, where a frequency band of the second communication link is lower than the frequency band on which the first communication link operates.

Based on this technical solution, the first station may use a low frequency technology to assist in beam alignment in a high-frequency communication system, thereby improving beam alignment efficiency.

According to a second aspect, a beam alignment method is provided. The method may be performed by a second station, or may be performed by a component (for example, a chip or a circuit) of a second station. This is not limited. For ease of description, the following uses an example in which the second station performs the method for description.

The method includes: obtaining first information, where the first information indicates a first beam group and a second beam group; and sending, based on the first information, a first frame corresponding to the first beam group and a first frame corresponding to the second beam group, where a first measurement result of the first beam group and a second measurement result of the second beam group are used to determine a target beam used for beam alignment, and are further used to determine stopping of beam measurement.

The implementations of the second aspect are implementations corresponding to the implementations of the first aspect. For beneficial technical effect of the implementations of the second aspect, refer to the descriptions of related implementations of the first aspect. Details are not described herein.

With reference to the second aspect, in some implementations, the method further includes: receiving second information, where the second information indicates that beam measurement is stopped.

With reference to the second aspect, in some implementations, the method further includes: receiving third information, where the third information is generated based on the first measurement result and the second measurement result; and determining the target beam based on the third information, and further determining stopping of beam measurement.

With reference to the second aspect, in some implementations, the method further includes: sending second frames corresponding to M second beams, where third measurement results of the M second beams indicate first S second beams with highest receiving quality in the M second beams, a target space is determined based on a space to which the first S second beams belong, a lobe width of the second beam is greater than a lobe width of a first beam, the first beam group and the second beam group are beam groups in L beam groups, the L beam groups are obtained by grouping N first beams, and the N first beams are beams in the target space.

With reference to the second aspect, in some implementations, the method further includes: sending fourth information, and receiving a shortest path signal component of the fourth information, to determine whether a first station and the second station are in a line-of-sight LOS scenario.

With reference to the second aspect, in some implementations, the method further includes: sending a third frame corresponding to a third beam, where a fourth measurement result of the third beam is used to determine whether a first station and the second station are in a line-of-sight LOS scenario, the third beam is transmitted on a second communication link, a frequency band on which the second communication link operates is higher than or equal to a second threshold, and a direction of the third beam is a direction from the first station to the second station, or a direction of the third beam is a direction from the second station to the first station.

With reference to the second aspect, in some implementations, the first measurement result indicates receiving quality of a beam in the first beam group, the second measurement result indicates receiving quality of a beam in the second beam group, and when receiving quality of all first beams in the second beam group is not higher than receiving quality of a first beam with highest quality in the first beam group, beam measurement is stopped, where the first beam group and the second beam group include the target beam.

With reference to the second aspect, in some implementations, the second information further indicates the target beam.

With reference to the second aspect, in some implementations, the first beam group and the second beam group are obtained through grouping based on one or more of the following information: location information of the first station, location information of the second station, historical data of communication between the first station and the second station, historical beam alignment directions of the first station and the second station, a type of the first station, a type of the second station, or an environment of communication between the first station and the second station, where the target beam is used for beam alignment between the first station and the second station.

With reference to the second aspect, in some implementations, the first beam group and the second beam group are beam groups in L beam groups, and the L beam groups are obtained by grouping N first beams.

With reference to the second aspect, in some implementations, the first information indicates one or more of the following: a manner of grouping the N first beams into the L beam groups, identifiers of the L beam groups, identifiers of the N first beams, measurement duration of the L beam groups, measurement duration of a last beam group in the L beam groups, measurement start time of the L beam groups, whether the first station and the second station are in the line-of-sight LOS scenario, whether the N first beams are grouped into the L beam groups, whether to feed back measurement results of the L beam groups, types of the fed-back measurement results of the L beam groups, and whether to enable transmission on a first communication link, where the L beam groups are transmitted on the first communication link, and a frequency band on which the first communication link operates is higher than or equal to a first threshold.

With reference to the second aspect, in some implementations, the first information indicates the first station to start measurement of the first beam group and measurement of the second beam group.

With reference to the second aspect, in some implementations, the N first beams are the beams in the target space, the target space is divided into L subspaces, and the L beam groups respectively include beams in the L subspaces.

With reference to the second aspect, in some implementations, the target space is a cone, and when the N first beams are transmission beams of the second station, a vertex of the cone is located at the second station, or when the N first beams are reception beams of the first station, a vertex of the cone is located at the first station; and the cone is divided into the L subspaces by L-1 cone surfaces, where a vertex of the L-1 cone surfaces is located at the vertex of the cone, opening angles of the L-1 cone surfaces increase sequentially, a 1^{st} subspace in the L subspaces is a cone enclosed by a 1^{st} cone surface in the L-1 cone surfaces, a j^{th} subspace in the L subspaces is a space enclosed by a j^{th} cone surface and a (j-1)^{th} cone surface in the L-1 cone surfaces, and j≥2.

With reference to the second aspect, in some implementations, a k^{th} beam group in the L beam groups is determined based on a measurement result of at least one beam group in first k-1 beam groups in the L beam groups, where k≥2.

With reference to the second aspect, in some implementations, the target space is an elliptic cone, and when the N first beams are transmission beams of the second station, a vertex of the elliptic cone is located at the second station, or when the N first beams are reception beams of the first station, a vertex of the elliptic cone is located at the first station; and the elliptic cone is divided into the L subspaces by L-1 elliptic cone surfaces, where a vertex of the L-1 elliptic cone surfaces is located at the vertex of the elliptic cone, opening angles of the L-1 elliptic cone surfaces increase sequentially, a 1^{st} subspace in the L subspaces is an elliptic cone enclosed by a 1^{st} elliptic cone surface in the L-1 elliptic cone surfaces, a k^{th} subspace in the L subspaces is a space enclosed by a k^{th} elliptic cone surface and a (k-1)^{th} elliptic cone surface in the L-1 elliptic cone surfaces, and j≥2.

With reference to the second aspect, in some implementations, a probability that the target beam used for beam alignment exists in an i^{th} beam group in the L beam groups is greater than or equal to a probability that the target beam exists in an (i+1)^{th} beam group in the L beam groups, where L-1≥i≥1.

With reference to the second aspect, in some implementations, the N first beams are determined based on one or more of the following information: the location information of the first station, the location information of the second station, the historical data of communication between the first station and the second station, the historical beam alignment directions of the first station and the second station, the type of the first station, the type of the second station, or the environment of communication between the first station and the second station.

With reference to the second aspect, in some implementations, the N first beams are the beams in the target space, and the target space is the cone or the elliptic cone; and when the N first beams are the transmission beams of the second station, a vertex of the target space is located at the second station, and a direction from the vertex of the target space to a bottom surface center is a direction from a location of the second station to a location of the first station; or when the N first beams are the reception beams of the first station, a vertex of the target space is located at the first station, and a direction from the vertex of the target space to a bottom surface center is a direction from a location of the first station to a location of the second station.

With reference to the second aspect, in some implementations, the first station and the second station are in the line-of-sight LOS scenario.

With reference to the second aspect, in some implementations, the method further includes: receiving fourth information, and determining, based on a shortest path signal component of the fourth information, whether the first station and the second station are in the line-of-sight LOS scenario.

With reference to the second aspect, in some implementations, the fourth information is further used to determine the location information of the first station.

With reference to the second aspect, in some implementations, the method further includes: obtaining a fourth measurement result of a third beam, where the fourth measurement result is used to determine whether the first station and the second station are in the line-of-sight LOS scenario, the third beam is transmitted on the first communication link, the frequency band on which the first communication link operates is higher than or equal to the first threshold, and a direction of the third beam is a direction from the first station to the second station, or a direction of the third beam is a direction from the second station to the first station.

With reference to the second aspect, in some implementations, when a beam in the first beam group is the transmission beam of the second station, a frame corresponding to the beam in the first beam group is directionally received by the first station; or when a beam in the first beam group is the reception beam of the first station, a frame corresponding to the beam in the first beam group is directionally sent by the second station.

With reference to the second aspect, in some implementations, a directional receiving direction of the first station or a directional sending direction of the second station is determined based on one or more of the following information: the location information of the first station, the location information of the second station, the historical data of communication between the first station and the second station, the historical beam alignment directions of the first station and the second station, the type of the first station, the type of the second station, or the environment of communication between the first station and the second station.

With reference to the second aspect, in some implementations, the method further includes: determining whether the first station and the second station are in the line-of-sight LOS scenario; and when the first station and the second station are in the line-of-sight LOS scenario, determining to group the N first beams into the L beam groups.

With reference to the second aspect, in some implementations, sending the first information includes: sending the first information on a second communication link, where a frequency band of the second communication link is lower than the frequency band on which the first communication link operates.

According to a third aspect, a communication method is provided. The method may be performed by a first station, or may be performed by a component (for example, a chip or a circuit) of a first station. This is not limited. For ease of description, the following uses an example in which the first station performs the method for description.

The method includes: receiving fourth information to obtain a shortest path signal component of the fourth information; and determining, based on the shortest path component, whether the first station and a second station are in a line-of-sight LOS scenario. The fourth information is sent on a second communication link, and a frequency band of the second communication link is lower than or equal to a second threshold.

With reference to the third aspect, in some implementations, the shortest path signal component is greater than or equal to the second threshold, and the first station and the second station are in the LOS scenario.

According to a fourth aspect, a communication method is provided. The method may be performed by a second station, or may be performed by a component (for example, a chip or a circuit) of a second station. This is not limited. For ease of description, the following uses an example in which the second station performs the method for description.

The method includes: sending fourth information, and receiving a shortest path component of the fourth information, to determine whether a first station and the second station are in a line-of-sight LOS scenario.

According to a fifth aspect, a communication method is provided. The method may be performed by a first station, or may be performed by a component (for example, a chip or a circuit) of a first station. This is not limited. For ease of description, the following uses an example in which the first station performs the method for description.

The method includes: obtaining a measurement result of a third beam, and determining, based on the measurement result of the third beam, whether the first station and a second station are in a line-of-sight LOS scenario. A third frame corresponding to the third beam is sent on a first communication link, and a frequency band of the first communication link is higher than or equal to a first threshold.

With reference to the fifth aspect, in some implementations, the measurement result of the third beam indicates receiving quality of the third beam, the receiving quality of the third beam is greater than or equal to a third threshold, and the first station and the second station are in the LOS scenario.

According to a sixth aspect, a communication method is provided. The method may be performed by a second station, or may be performed by a component (for example, a chip or a circuit) of a second station. This is not limited. For ease of description, the following uses an example in which the second station performs the method for description.

The method includes: sending a third frame corresponding to a third beam, where a measurement result of the third beam is used to determine whether a first station and the second station are in a line-of-sight LOS scenario.

According to a seventh aspect, a communication method is provided. The method may be performed by a first station, or may be performed by a component (for example, a chip or a circuit) of a first station. This is not limited. For ease of description, the following uses an example in which the first station performs the method for description.

The method includes: determining N first beams, where the N first beams are determined based on at least one or more pieces of the following information: historical data of communication between the first station and a second station, historical beam alignment directions of the first station and the second station, or an environment of communication between the first station and the second station, and measurement results of the N first beams are used to determine a target beam used for beam alignment.

According to an eighth aspect, a communication apparatus is provided. The apparatus is configured to perform the method provided in the first aspect, the third aspect, or the fifth aspect. Specifically, the apparatus may include a unit and/or a module, for example, a processing unit and/or a communication unit, that are/is configured to perform the method provided in any one of the foregoing implementations of the first aspect, the third aspect, or the fifth aspect.

For example, when the communication apparatus is the first station in the first aspect, the communication unit is configured to obtain first information, where the first information indicates a first beam group and a second beam group; and the processing unit is configured to obtain a first measurement result of the first beam group and a second measurement result of the second beam group based on the first information, where the first measurement result and the second measurement result are used to determine a target beam used for beam alignment, and are further used to determine stopping of beam measurement.

For example, when the communication apparatus is the first station in the third aspect, the communication unit is configured to receive fourth information to obtain a shortest path signal component of the fourth information; and the processing unit is configured to determine, based on the shortest path component, whether the first station and a second station are in a line-of-sight LOS scenario.

For example, when the communication apparatus is the first station in the fifth aspect, the communication unit obtains a measurement result of a third beam, and determines, based on the measurement result of the third beam, whether the first station and a second station are in a line-of-sight LOS scenario.

For example, when the communication apparatus is the first station in the seventh aspect, the processing unit is further configured to determine N first beams, where the N first beams are determined based on at least one or more pieces of the following information: historical data of communication between the first station and a second station, historical beam alignment directions of the first station and the second station, or an environment of communication between the first station and the second station, and measurement results of the N first beams are used to determine a target beam used for beam alignment.

In an implementation, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first station. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus is configured to perform the method provided in the second aspect, the fourth aspect, or the sixth aspect. Specifically, the apparatus may include a unit and/or a module, for example, a processing unit and/or a communication unit, that are/is configured to perform the method provided in any one of the foregoing implementations of the second aspect, the fourth aspect, or the sixth aspect.

For example, when the communication apparatus is the second station in the second aspect, the communication unit is further configured to obtain first information, where the first information indicates a first beam group and a second beam group; and the communication unit is further configured to send, based on the first information, a first frame corresponding to the first beam group and a first frame corresponding to the second beam group, where a first measurement result of the first beam group and a second measurement result of the second beam group are used to determine a target beam used for beam alignment, and are further used to determine stopping of beam measurement.

For example, when the communication apparatus is the second station in the fourth aspect, the communication unit is configured to send fourth information, and receive a shortest path component of the fourth information, to determine whether a first station and the second station are in a line-of-sight LOS scenario.

For example, when the communication apparatus is the second station in the sixth aspect, the communication unit is configured to send a third frame corresponding to a third beam, where a measurement result of the third beam is used to determine whether a first station and the second station are in a line-of-sight LOS scenario.

In an implementation, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the first station. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a tenth aspect, a communication apparatus is provided. The apparatus includes: a memory, configured to store a program; and at least one processor, configured to execute a computer program or instructions stored in the memory, to perform the method according to any one of the foregoing implementations of the first aspect to the seventh aspect, or any one of the foregoing implementations of the first aspect and the seventh aspect.

According to an eleventh aspect, this application provides a processor, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable medium stores program code executed by a device, and the program code includes instructions for performing the method provided in any one of the implementations of the first aspect to the seventh aspect.

According to a thirteenth aspect, a computer program product including instructions is provided. When the computer program product runs on a computer, the computer is enabled to perform the method provided in any one of the implementations of the first aspect to the seventh aspect.

According to a fourteenth aspect, a chip is provided. The chip includes a processor and a communication interface. The processor reads, through the communication interface, instructions stored in a memory, to perform the method provided in any one of the implementations of the first aspect to the seventh aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations.

According to a fifteenth aspect, a communication system is provided, including the foregoing first station and second station.

### BRIEF DESCRIPTION OF DRAWINGS

FIG. 1 is a diagram of an application scenario to which an embodiment of this application is applicable;
FIG. 2 is a diagram of a communication apparatus according to this application;
FIG. 3 is a diagram of two communication scenarios;
FIG. 4 is a schematic flowchart of a beam alignment method according to an embodiment of this application;
FIG. 5 is a schematic flowchart of two implementations of obtaining first information according to an embodiment of this application;
FIG. 6 is a schematic flowchart of a manner of sending first information according to an embodiment of this application;
FIG. 7 is a schematic flowchart of another manner of sending first information according to an embodiment of this application;
FIG. 8 is a schematic flowchart of a method for determining whether to stop beam measurement according to an embodiment of this application;
FIG. 9 is a schematic flowchart of a method for grouping N first beams into L beam groups according to an embodiment of this application;
FIG. 10 is a schematic flowchart of determining N first beams through hierarchical scanning according to an embodiment of this application;
FIG. 11 is a diagram of a grouping manner of L beam groups according to an embodiment of this application;
FIG. 12 is a schematic flowchart of a method for determining whether a scenario is an LOS communication scenario according to an embodiment of this application;
FIG. 13 is a schematic flowchart of a communication manner according to an embodiment of this application;
FIG. 14 is a schematic flowchart of another communication manner according to an embodiment of this application;
FIG. 15 is a block diagram of a communication apparatus according to an embodiment of this application;
FIG. 16 is a diagram of another communication apparatus according to an embodiment of this application; and
FIG. 17 is a diagram of a chip system according to an embodiment of this application.

### DESCRIPTION OF EMBODIMENTS

The following describes technical solutions of this application with reference to accompanying drawings.

The technical solutions provided in embodiments of this application may be applied to a wireless local area network (wireless local area network, WLAN) scenario, for example, support an institute of electrical and electronics engineers (Institute of Electrical and Electronics Engineers, IEEE) 802.11 related standard, for example, IEEE 802.11a/b/g, 802.11n (Wi-Fi 4), 802.11ac (Wi-Fi 5), 802.11ax (Wi-Fi 6), 802.11be (Wi-Fi 7), 802.11bn (Wi-Fi 8), 802.11ad, 802.11ay, or 802.11bf, and may be further applied to another wireless protocol or standard that has a beam alignment phase, for example, a 6G standard and an ultra-wideband (ultra-wideband, UWB)-based 802.15 series standard. The 802.11n standard is referred to as high throughput (high throughput, HT), the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network, especially a network to which an IEEE 802.11 system standard is applied, is deployed, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage range and a used wireless access protocol, the various aspects provided in embodiments of this application are applicable to any appropriate wireless network.

The technical solutions in embodiments of this application may be further applied to various wireless communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT), vehicle-to-everything (vehicle to x, V2X), or an ultra-wideband (UWB) communication system.

The foregoing communication systems to which this application is applicable are merely examples for description, and the communication systems to which this application is applicable are not limited thereto. Unified descriptions are provided herein, and are not described below again.

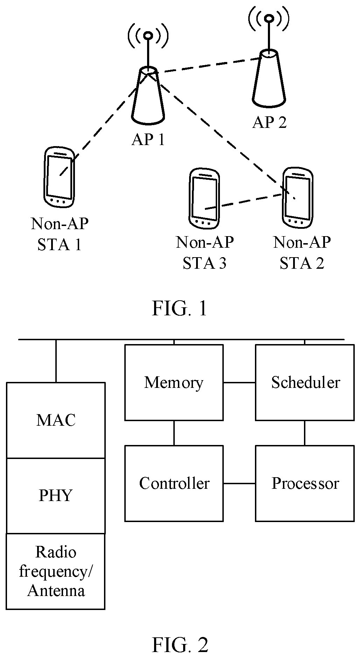

FIG. 1 is a diagram of an application scenario to which an embodiment of this application is applicable. As shown in FIG. 1, a communication method provided in this application is applicable to data communication between an access point (access point, AP) and a station (station, STA). The station may be a non-access point station (non-access point station, non-AP STA), which is briefly referred to as a non-AP station or a STA. Specifically, the solutions of this application are applicable to data communication between an AP and one or more non-AP stations (for example, data communication between an AP 1, and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11bn, 802.11ad, 802.11ay, and 802.11bf.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, 802.11ay, 802.11bn, and 802.11bf.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

FIG. 2 shows a communication apparatus according to this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus according to this application, and does not constitute limitation on this application. For example, the apparatus may alternatively not include the controller and/or the scheduler.

For ease of understanding of the technical solutions in embodiments of this application, some terms or concepts that may be used in embodiments of this application are first briefly described.

### 1. Beam (beam)

A beam used to send a signal may be referred to as a transmission beam (transmission beam, Tx beam). The transmission beam may refer to signal strength distribution, in different directions in space, of a signal transmitted through an antenna.

A beam used to receive a signal may be referred to as a reception beam (reception beam, Rx beam). The reception beam may refer to signal strength distribution, in different directions in space, of a radio signal received through an antenna.

The beam may be a wide beam or a narrow beam, and a lobe angle of the wide beam is greater than a lobe angle of the narrow beam. The lobe width refers to an angle of a sector formed by the radio signal in space. The wide beam has a wide coverage range, but has weak signal strength and is prone to interference and attenuation. The narrow beam has strong signal strength but a narrow coverage range.

In embodiments of this application, one or more beams may form a beam group. For example, a plurality of transmission beams (or reception beams) of one device may be grouped into a plurality of beam groups, and one beam group may include one or more transmission beams (or reception beams). Beam group identifiers may be allocated to the plurality of beam groups, and the device may obtain a mapping relationship between the beam group identifier and a transmission beam (or reception beam) identifier included in the beam group.

### 2. Beam alignment

In high-frequency communication, such as high-frequency standards (45 GHz or above) like 802.11ad and 802.11ay standards running near 60 GHz and an integrated millimeter wave (Integrated mmWave) in Wi-Fi 8, a high operating frequency causes a large path loss when a signal is transmitted in space. To increase a communication distance, two communication devices may perform beam alignment through beam training before communication, to find a good communication link. Beam alignment may include one-way beam alignment and two-way beam alignment. The one-way beam alignment refers to determining a transmission beam or a reception beam of one communication device (for ease of description, the following uses a first station as an example), so that the first station sends data to the other communication device (for ease of description, the following uses a second station as an example) through the transmission beam, or receives data from the other communication device through the reception beam. The two-way beam alignment refers to determining a transmission beam of a first station and a reception beam of a second station, so that the first station sends data to the second station through the transmission beam, and the second station receives the data through the reception beam. Alternatively, similarly, the two-way beam alignment refers to determining a reception beam of a first station and a transmission beam of a second station, so that the second station sends data to the first station through the transmission beam, and the first station receives the data through the reception beam.

In some implementations, in a beam alignment process, a determined direction of a reception beam of a station used for beam alignment through beam training can be directly considered as a transmission beam of the station used for beam alignment. In other words, the transmission beam and the reception beam of the station may be determined through one round of training. In some other implementations, a determined direction of a reception beam of a station used for beam alignment through beam training cannot be directly considered as a transmission beam of the station used for beam alignment. In other words, the transmission beam and the reception beam of the station may be separately determined through two rounds of beam training. This is not particularly limited in this application.

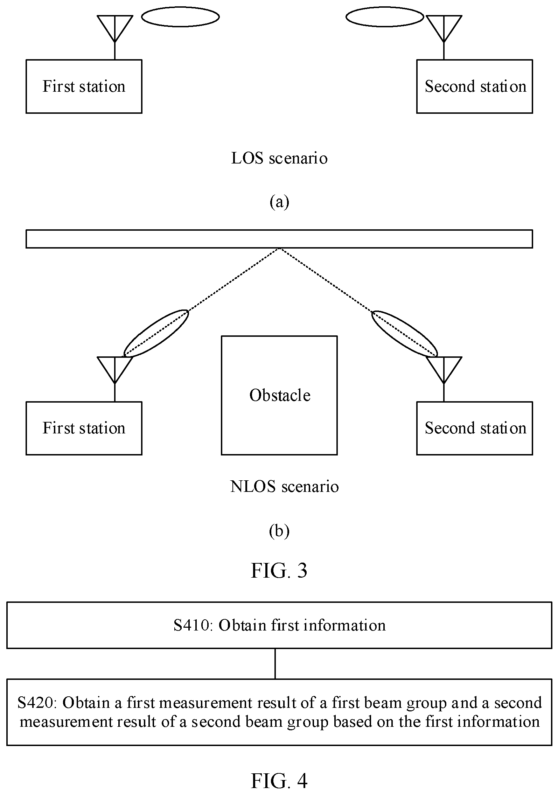

A beam used by the first station for beam alignment and a beam used by the second station for beam alignment are related to a relative location of the first station and the second station and a communication scenario between the first station and the second station. For ease of understanding embodiments of this application, the following describes two possible communication scenarios by using examples with reference to FIG. 3.

FIG. 3 is a diagram of two communication scenarios. Refer to (a) in FIG. 3, the first station and the second station are in a line-of-sight (line-of-sight, LOS) scenario. In this scenario, there is a high probability that a beam direction used for beam alignment is a relative direction between the first station and the second station. Refer to (b) in FIG. 3, the first station and the second station are in a non-line-of-sight (non-line-of-sight, NLOS) scenario. In this scenario, because there is an obstacle between the first station and the second station, a beam direction used for beam alignment is usually not a relative direction between the first station and the second station.

To determine a beam direction used for beam alignment, for example, determine a transmission beam of the first station, generally, the first station needs to perform exhaustive and undifferentiated beam scanning in a specific range (for example, a coverage range), and determine, based on a measurement result of each beam, a beam used for beam alignment. This beam alignment process causes a large quantity of beam training overheads.

Embodiments of this application provide a beam alignment method, to reduce beam training overheads caused by beam alignment. For ease of understanding embodiments of this application, the following describes a method provided in an embodiment of this application with reference to FIG. 4.

It may be understood that the first station in embodiments of this application may be an access point AP, and the second station may be a non-access point non-AP (for example, a STA); or the second station may be an access point STA, and the first station may be a non-access point AP; or the first station and the second station are access point APs; or the first station and the second station are non-access points non-APs.

It may be further understood that, in a beam alignment process, if a transmission beam of the second station needs to be determined, the second station sends transmission beams in a plurality of directions, and the first station measures receiving quality of the plurality of transmission beams, to determine a transmission beam used for beam alignment; or if a reception beam of the first station needs to be determined, the second station may send a transmission beam in one direction, and the first station measures reception beams in a plurality of directions, to determine a reception beam used for beam alignment. Correspondingly, if a transmission beam of the first station needs to be determined, the first station sends transmission beams in a plurality of directions, and the second station measures receiving quality of the plurality of transmission beams, to determine a transmission beam used for beam alignment; or if a reception beam of the second station needs to be determined, the first station may send a transmission beam in one direction, and the second station measures reception beams in a plurality of directions, to determine a reception beam used for beam alignment.

For brevity, in the following description of embodiments of this application, determining the transmission beam of the second station or determining the reception beam of the first station is used as an example for description. In other words, the following mainly uses an example in which the first station is used as a measurement-end entity for beam measurement for description. The transmission beam of the first station is determined, or the reception beam of the second station is determined. That is, a manner in which the second station is used as a measurement entity for beam measurement is similar to this manner. Details are not described.

It should be understood that sequence numbers of the following processes do not mean an execution sequence. The execution sequence of the processes should be determined based on functions and internal logic of the processes, and should not be construed as any limitation on an implementation process of embodiments of this application.

FIG. 4 is a schematic flowchart of a beam alignment method according to an embodiment of this application. The method includes the following steps.

S410: A first station obtains first information.

The first information indicates a first beam group and a second beam group.

S420: The first station obtains a first measurement result of the first beam group and a second measurement result of the second beam group based on the first information.

The first measurement result and the second measurement result are used to determine a target beam, and are further used to determine stopping of beam measurement. The target beam is used for beam alignment.

The first beam group and the second beam group may be beam groups in L beam groups, and the L beam groups may be obtained by grouping N first beams. N and L are positive integers greater than 2.

It may be understood that the target beam belongs to the N first beams, and the N first beams may be N transmission beams of the second station, or the N first beams may be N reception beams of the first station. When the N first beams are the transmission beams of the second station, the second station sends N first frames to the first station through the N first beams, and the first station may omnidirectionally or directionally measure the N first beams. When the N first beams are the reception beams of the first station, the second station may omnidirectionally or directionally send N first frames to the first station, and the first station may scan and measure the N first beams.

The L beam groups may be measured in a time sequence. For example, 10 first beams (beam #1 to beam #10) are grouped into four beam groups (beam group #1 to beam group #4), the beam group #1 includes the beam #1 to the beam #4, the beam group #2 includes the beam #5 to the beam #7, the beam group #3 includes the beam #8 and the beam #9, and the beam group #4 includes the beam #10. The beam group #1 to the beam group #4 are sequentially measured in a time sequence. In other words, the first station may first measure the beam group #1 to obtain a measurement result of the beam #1 to the beam #4, then measure the beam group #2 to obtain a measurement result of the beam #5 to the beam #7, and by analogy.

It may be understood that a sequence of measuring beams in a beam group is not limited in embodiments of this application. For example, the beam #1 to the beam #4 included in the beam group #1 may be measured in any sequence.

In some implementations, the first beam group and the second beam group may be two adjacent measured beam groups in the L beam groups, for example, the beam group #1 and the beam group #2, and for another example, the beam group #2 and the beam group #3.

It may be understood that the first measurement result and the second measurement result are used to determine stopping of beam measurement. In other words, the first station may not need to measure a beam group that is arranged after the first beam group and the second beam group.

In this embodiment of this application, after obtaining a measurement result of one group, the first station may determine, based on the measurement result of the group and a measurement result of a previous group, whether to continue to perform beam measurement. For example, if the measurement result of the group indicates that receiving quality of all first beams in the group is not higher than highest quality in the previous group, beam measurement is stopped, and the target beam is selected from the previous beam group. If the measurement result of the group indicates that receiving quality of a first beam in the group is higher than or equal to highest receiving quality in the previous group, beam measurement continues until the target beam is determined or all to-be-measured beams are measured. It may be understood that if the first station measures last two beam groups, the first station may select a first beam with highest receiving quality in the two beam groups as the target beam.

Based on this technical solution, in a beam alignment process, the first station does not perform exhaustive and undifferentiated beam measurement, but groups to-be-measured first beams, and determines a target beam and stopping of beam measurement based on a measurement result of a beam group. In other words, because the to-be-measured beams are grouped into a plurality of beam groups, the first station can learn, in a measurement process, whether beam measurement can be stopped. If the first station learns, in the measurement process, that beam measurement can be stopped, the first station may not continue to measure a remaining to-be-measured beam, thereby reducing beam training overheads in a beam alignment process.

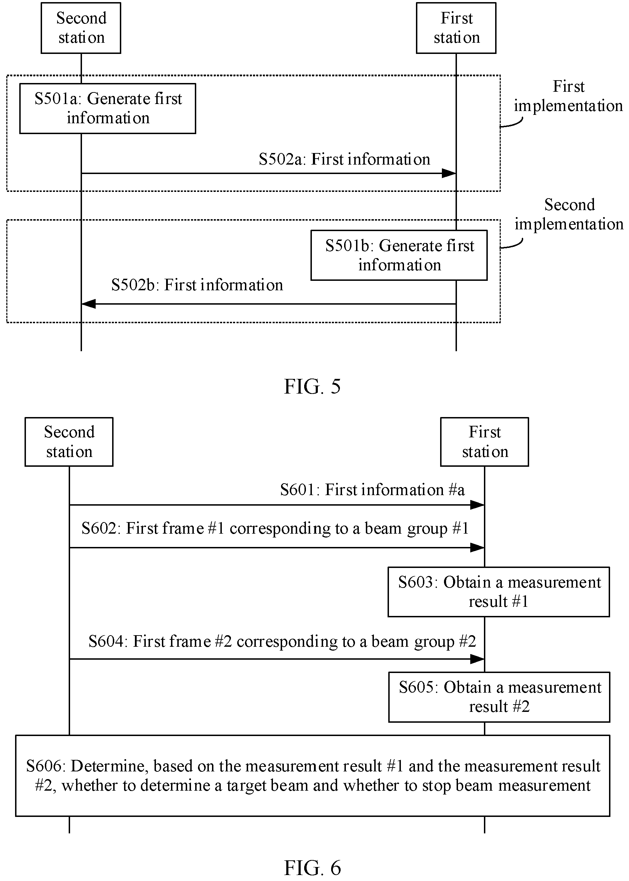

It should be noted that, it can be learned from the solution described in FIG. 4 that the first station needs to measure the N first beams based on a grouping result of the L beam groups, to obtain measurement results of a plurality of groups. The first station may obtain the first information, where the first information indicates the first beam group and the second beam group. For example, the first information indicates the L beam groups. Because both the first station and/or the second station may group the N first beams into the L beam groups, this application may include at least two implementations shown in FIG. 5.

FIG. 5 is a schematic flowchart of two implementations of obtaining first information according to an embodiment of this application.

A first implementation includes steps S501a and S502a.

S501a: A second station generates first information.

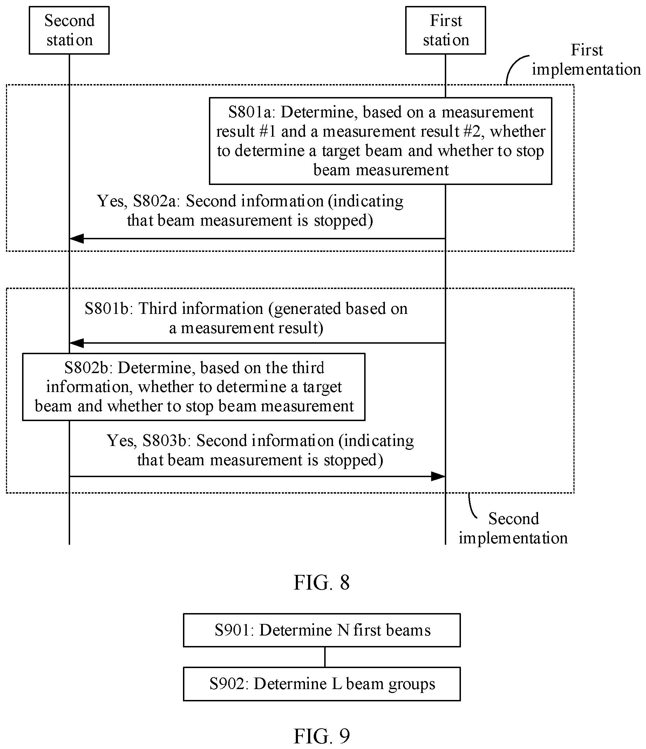

The second station may group N first beams into L beam groups, and generate the first information based on a grouping result. For a manner of grouping the N first beams into the L beam groups, refer to the following descriptions in FIG. 9 to FIG. 11. Details are not described herein.

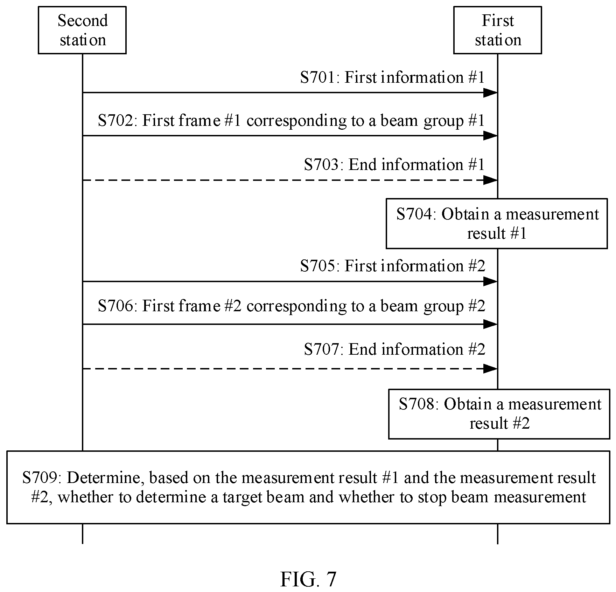

The first information may indicate the L beam groups in a plurality of manners. For example, the first information may indicate at least one or more of the following: a grouping manner of the L beam groups, a measurement time period of the L beam groups, identifiers of the L beam groups, an identifier of a first beam included in the L beam groups, or a value of L. Content indicated by the first information is related to a manner of sending the first information. For related descriptions, refer to the following descriptions in FIG. 6 and FIG. 7. Details are not described herein.

S502a: The second station sends first information to a first station. Correspondingly, the first station receives the first information from the second station.

The first station receives the first information, and may perform beam measurement based on the first information, to obtain measurement results of a plurality of groups.

The foregoing is an implementation in which the second station sends the first information to the first station. The following describes an implementation in which the first station sends first information to the second station.

A second implementation includes steps S501b and S502b.

S501b: A first station generates first information.

The first station may group N first beams into L beam groups, and generate the first information based on a grouping result. For a manner of grouping the N first beams into the L beam groups, refer to the following descriptions in FIG. 9 to FIG. 11. For content indicated by the first information, refer to the following descriptions in FIG. 6 and FIG. 7. Details are not described herein.

S502b: The first station sends the first information to a second station. Correspondingly, the second station receives the first information from the first station.

The second station receives the first information, and may send, to the second station based on the first information, N first frames corresponding to the N first beams.

The foregoing describes the two manners of obtaining the first information with reference to FIG. 5. For ease of description, the following uses the first implementation (the implementation in which the second station sends the first information to the first station) for description.

Because content indicated by the first information may be related to a manner of sending the first information, the following first describes two possible sending manners with reference to FIG. 6 and FIG. 7.

It should be noted that, for ease of description, the following sequentially marks the L beam groups as a beam group #1, a beam group #2, a beam group #3, and the like in a measurement time sequence. First beams in the beam group #1 are marked as L1 first beams #1, first beams in the beam group #2 are marked as L2 first beams #2, first beams in the beam group #3 are marked as L3 first beams #3, and by analogy. A first frame corresponding to the first beam #1 is marked as a first frame #1, a first frame corresponding to the first beam #2 is marked as a first frame #2, a first frame corresponding to the first beam #3 is marked as a first frame #3, and by analogy. A measurement result of a first beam group #1 is marked as a measurement result #1, a measurement result of a first beam group #2 is marked as a measurement result #2, a measurement result of a first beam group #3 is marked as a measurement result #3, and by analogy. Details are not described below.

FIG. 6 is a schematic flowchart of a manner of sending first information according to an embodiment of this application.

S601: A second station sends first information #a to a first station. Correspondingly, the first station receives the first information #a from the second station.

The first information #a indicates L beam groups. In a first example, the first information #a may indicate measurement duration of the L beam groups. For example, the first information #a may include a field indicating measurement duration of each group. For example, the first information #a indicates that a beam group #1 lasts for 2 seconds, a beam group #2 lasts for 3 seconds, and a beam group #3 lasts for 4 seconds. Therefore, after the first station starts beam measurement, a measurement result obtained in first two seconds is a measurement result #1 of the beam group #1, a measurement result obtained in later three seconds is a measurement result #2 of the beam group #2, and a measurement result obtained in last four seconds is a measurement result #3 of the beam group #3.

In a second example, the first information #a may indicate a mapping relationship between identification information of a beam group and identification information of a first beam in the beam group. For example, the first information #a may include a field indicating the mapping relationship. A first frame subsequently received by the first station may include a field indicating an identifier of a corresponding first beam, so that the first station may determine, based on the mapping relationship and the identifier of the first beam, a beam group to which the first beam belongs.

In a third example, the first information #a indicates a value of L and identification information of the L beam groups. For example, the first information #a includes a field indicating the value of L and a field indicating the identification information of the L beam groups. A first frame subsequently received by the first station may include a field indicating a beam group to which a corresponding first beam belongs, so that the first station may determine, based on the identification information of the L beam groups and the value of L, whether the first beam belongs to a last beam group.

In a fourth example, the first information #a indicates a grouping manner of the L beam groups. For example, the first information #a may include a field indicating the grouping manner. The field may indicate how the L beam groups are obtained through grouping by the first station. Alternatively, the first station may preconfigure a plurality of grouping schemes, and the field may indicate an identifier of the grouping scheme. The first station may determine, based on the identifier of the grouping scheme, a grouping scheme to be used, and perform beam measurement based on the grouping scheme.

The foregoing describes an example of an indication manner of the first information #a. However, it should be understood that this application is not limited thereto.

In some implementations, the first information may be sent on a communication link #1. A frequency band of the communication link #1 may be lower than a specific threshold. For example, the communication link #1 may be referred to as a low frequency communication link. Therefore, in this embodiment of this application, a low frequency technology (for example, a low Wi-Fi frequency) may be used to assist in beam alignment in a high frequency communication system (for example, an IMMW communication system), thereby improving beam alignment efficiency. Details are not described below.

S602: The second station sends, to the first station, a first frame #1 corresponding to the beam group #1. Correspondingly, the first station measures the beam group #1.

When the beam group #1 includes a transmission beam of the second station, the second station sends L1 first frames #1 to the first station through L1 first beams #1, and the first station may omnidirectionally or directionally receive the L1 first frames #1, and measure receiving quality of the L1 first beams #1.

When the beam group #1 includes a reception beam of the first station, the second station may omnidirectionally or directionally send L1 first frames #1 to the first station, and the first station receives the L1 first frames #1 through L1 first beams #1, and measures receiving quality of the L1 first beams #1.

In some implementations, the first frame #1 may include a field indicating an identifier of the beam group #1. Therefore, the first station may determine, based on the identifier of the beam group #1, that a first beam #1 corresponding to the first frame #1 belongs to the beam group #1.

In some implementations, the first frame #1 may include an identifier indicating the first beam #1 corresponding to the first frame #1. Therefore, the first station may determine, based on the identifier of the first beam #1, a first beam #1 through which the first frame #1 is sent.

In some implementations, the first frame may be sent on a communication link #2. A frequency band of the communication link #2 may be higher than a specific threshold. For example, the communication link #2 may be referred to as a high-frequency communication link, and the first beam is an IMMW beam. Details are not described below.

S603: The first station obtains the measurement result #1.

The first station may measure one or more of the following content of the L1 first beams #1: a received signal strength indicator (received signal strength indication, RSSI) and a signal-to-noise ratio (signal-to-noise ratio, SNR). The first station may store measurement results #1 of the L1 first beams #1.

The measurement results #1 may be used to determine receiving quality of the L1 first beams #1. For example, the measurement results #1 may include RSSI values of the L1 first beams #1. A higher RSSI value indicates higher quality of a corresponding first beam #1. For another example, the measurement results #1 may include SNR values of the L1 first beams #1. A higher SNR indicates higher quality of a corresponding first beam #1. For still another example, the measurement results #1 may include RSSI values and SNR values of the L1 first beams #1. The first station may process the RSSI values and the SNR values according to a specific rule, to determine quality of the L1 first beams #1. It may be understood that a measurement manner is not particularly limited in this embodiment of this application, and the first station may alternatively determine the quality of the L1 first beams #1 by measuring another indicator.

S604: The second station sends, to the first station, a first frame #2 corresponding to the beam group #2. Correspondingly, the first station measures the beam group #2.

For a description of step S604, refer to the foregoing description of step S602. For brevity, details are not described herein.

S605: The first station obtains the measurement result #2.

The first station obtains the measurement result #2, for example, obtains receiving quality of L2 first beams #2. Similarly, the measurement result #2 may be used to determine the receiving quality of the L2 first beams #2. A manner is similar to the description of the measurement result #1 in S603. Details are not described.

It may be understood that, in this embodiment of this application, the measurement result #1 and the measurement result #2 may be used to determine whether to determine a target beam and whether to stop beam measurement. A sequence in which the first station obtains the measurement result #1 and the measurement result #2 is not particularly limited in this embodiment of this application. In other words, an execution sequence of step S602 to step S605 is not particularly limited in this embodiment of this application. Similarly, a sequence in which a first station obtains a measurement result #1 and a measurement result #2 in FIG. 7 is not particularly limited in this embodiment of this application. Details are not described in the following.

S606: The first station or the second station determines, based on the measurement result #1 and the measurement result #2, whether to determine the target beam, and determines whether to stop beam measurement.

In some implementations, when receiving quality of all first beams #2 in the beam group #2 is not higher than receiving quality of a first beam #1 with highest quality in the beam group #1, beam measurement is stopped, and the target beam is determined in the beam group #1 and the beam group #2. For example, the first beam #1 with highest quality in the beam group #1 is the target beam. When receiving quality of a first beam #2 in the beam group #2 is higher than receiving quality of a first beam #1 with highest quality in the beam group #1, beam measurement is not stopped, and the first station continues subsequent beam measurement until the target beam is determined or all L beam groups are measured. For more detailed descriptions of a manner of determining, based on the measurement result, whether to stop beam measurement, refer to the following descriptions in FIG. 8. Details are not described herein.

FIG. 6 describes an implementation in which the first station obtains the L beam groups based on the first information before beam measurement. A grouping manner of aligning the L beam groups between the first station and the second station through less interaction can reduce beam training overheads. This embodiment of this application further provides an implementation. Each time before sending a first frame corresponding to one beam group, the second station may send one piece of first information to the first station, to indicate the first station to start measurement of the beam group. In this way, the first station can reliably group measurement results, thereby improving beam measurement reliability. With reference to FIG. 7, the following describes an implementation in which the first station starts measurement of a beam group based on triggering.

FIG. 7 is a schematic flowchart of another manner of sending first information according to an embodiment of this application.

S701: A second station sends first information #1 to a first station. Correspondingly, the first station receives the first information #1 from the second station.

The first information #1 indicates the first station to start measurement of a beam group #1. For example, the first information #1 may be a trigger frame, and the first station starts measurement of the beam group #1 based on triggering.

In some implementations, the first information #1 may indicate an identifier of the beam group #1. Therefore, the first station may determine, based on the identifier of the beam group #1, that the beam group #1 starts to be measured.

In some implementations, the first information #1 may indicate duration of the beam group #1. Therefore, the first station may perform measurement based on the duration of the beam group #1, to obtain a measurement result #1.

S702: The second station sends, to the first station, a first frame #1 corresponding to the beam group #1. Correspondingly, the first station measures the beam group #1.

For a description of step S702, refer to the foregoing description of step S602 in FIG. 6. For brevity, details are not described herein.

In some implementations, the first station may end measurement of the beam group #1 based on triggering. In other words, the first station and the second station may further perform the following step S703.

Optionally, in S703, the second station sends end information #1 to the first station. Correspondingly, the first station receives the end information #1 from the second station.

The end information #1 indicates the first station to end measurement of the beam group #1. For example, the end information #1 may be a trigger frame, and the first station ends measurement of the beam group #1 based on triggering.

In some implementations, the end information #1 may indicate an identifier of the beam group #1. Therefore, the first station may determine, based on the identifier of the beam group #1, that the beam group #1 ends to be measured.

S704: The first station obtains the measurement result #1.

For a description of step S704, refer to the foregoing description of step S603 in FIG. 6. For brevity, details are not described herein.

S705: The second station sends first information #2 to the first station. Correspondingly, the first station receives the first information #2 from the second station.

For a description of step S705, refer to the foregoing description of step S701. For brevity, details are not described herein.

In some implementations, the first information #2 may further indicate the first station to end measurement of a previous beam group (that is, the beam group #1). In other words, subsequently sent first information may simultaneously trigger the first station to start measurement of a new beam group and end measurement of an old beam group.

S706: The second station sends, to the first station, a first frame #2 corresponding to a beam group #2. Correspondingly, the first station measures the beam group #2.

For a description of step S706, refer to the foregoing description of step S702. For brevity, details are not described herein.

In some implementations, the second station may also perform the following step S707, to trigger the first station to end measurement.

Optionally, in S707, the second station sends end information #2 to the first station. Correspondingly, the first station receives the end information #2 from the second station.

For a description of step S707, refer to the foregoing description of step S703. For brevity, details are not described herein.

S708: The first station obtains a measurement result #2.

For a description of step S708, refer to the foregoing description of step S704. For brevity, details are not described herein.

S709: The first station and/or the second station determines, based on the measurement result #1 and the measurement result #2, whether to determine a target beam, and determines whether to stop beam measurement.

For a description of step S709, refer to the foregoing description of step S606 in FIG. 6. For brevity, details are not described herein.

The foregoing describes an example of a manner of sending the first information.

In some implementations, the first information may further indicate whether the first station and the second station are in a line-of-sight LOS scenario. For example, the first information may include a field indicating whether a scenario is LOS. Therefore, the first station may determine a grouping manner based on the field indicating whether a scenario is LOS, to determine L beam groups.

In some implementations, the first information may further indicate whether the first station performs measurement in a grouping manner. For example, the first information may include a field indicating whether grouping is performed. The first station determines, based on the field, whether to perform beam measurement in the grouping manner.

In some implementations, the first information may further indicate the first station whether to feed back a measurement result. For example, the first information may include a field indicating whether to perform feedback. The first station may determine, based on the field, whether to feed back the measurement result to the second station.

In some implementations, the first information may indicate a type of the measurement result fed back by the first station. For example, the first information may include a feedback measurement result type field. For example, the feedback measurement result type field indicates the first station to feed back an RSSI of each first beam and a corresponding beam ID (for example, a complete mapping table between an RSSI and a beam ID), or feed back an RSSI of a first beam with a highest RSSI in each beam group and a corresponding beam ID, or feed back first Q higher-ranking RSSIs in each beam group and corresponding beam IDs (for example, a partial mapping table between an RSSI and a beam ID), or feed back a beam ID that is decided by the first station and that is used for beam alignment, so that the first station may feed back a measurement result according to an indication of the feedback measurement result type field.

With reference to FIG. 8, the following describes in detail whether the first station and/or the second station determine/determines, based on the measurement result #1 and the measurement result #2, whether to determine the target beam, and determine whether to stop beam measurement.

FIG. 8 is a schematic flowchart of a method for determining whether to stop beam measurement according to an embodiment of this application.

A first possible implementation includes the following steps S801a and 802a.

S801a: A first station determines, based on a measurement result #1 and a measurement result #2, whether to determine a target beam and whether to stop beam measurement.

For example, the measurement result #1 includes receiving quality of L1 first beams #1 in a beam group #1, and the measurement result #2 includes receiving quality of L2 first beams #2 in a beam group #2. When receiving quality of all first beams #2 in the beam group #2 is not higher than receiving quality of a first beam #1 with highest quality in the beam group #1, the first station determines to stop beam measurement, and determines the target beam in the beam group #1 and the beam group #2. For example, the first station determines the first beam #1 with highest quality in the beam group #1 as the target beam. For brevity of description, a condition that the measurement results of the two groups meet to stop beam measurement is referred to as an alignment condition. When the alignment condition is not met, that is, when receiving quality of a first beam #2 in the beam group #2 is higher than receiving quality of the first beam #1 with highest quality in the beam group #1, the first station determines not to stop beam measurement. In some implementations, the first station may discard the measurement result #1 of the beam group #1. The first station continues to measure a beam group #3, to obtain a measurement result #3, and determines whether the measurement result #2 and the measurement result #3 meet the alignment condition. When the alignment condition is met, the first station determines to stop beam measurement, and determines the target beam in the beam group #2 and the beam group #3. For example, the first station determines a first beam #2 with highest quality in the beam group #2 as the target beam. When the alignment condition is not met, the first station continues to perform beam measurement, and by analogy. Details are not described.

S802a: The first station sends second information #1 to the second station. Correspondingly, the second station receives the second information #1 from the first station.

The second information #1 indicates that beam measurement is stopped. Therefore, the second station may stop sending of a first frame based on the second information #1. Therefore, beam training overheads in a beam alignment process can be reduced.

In some implementations, the second information #1 may indicate the target beam. For example, the target beam is a transmission beam of the second station, and the second information #1 may indicate an identifier of the target beam, so that the second station may implement beam alignment based on the identifier of the target beam. It may be understood that if the target beam is a reception beam of the first station, the second information #1 may not indicate an identifier of the target beam, and the first station implements beam alignment based on the determined target beam.

In some implementations, the second information may be sent on a communication link #1. A frequency band of the communication link #1 may be lower than a specific threshold. For example, the communication link #1 may be referred to as a low frequency communication link. Therefore, in this embodiment of this application, a low frequency technology (for example, a low Wi-Fi frequency) may be used to assist in beam alignment in a high frequency communication system (for example, an IMMW communication system), thereby improving beam alignment efficiency. Details are not described below.

The foregoing describes an implementation in which the first station determines whether to stop beam measurement. The following second possible implementation describes an implementation in which the second station determines whether to stop beam measurement.

A second possible implementation includes the following steps S801b to S803b.

S801b: The first station sends third information to the second station. Correspondingly, the second station receives the third information from the first station.

The third information is generated based on a measurement result #1 and a measurement result #2. For example, the third information includes the measurement result #1 and the measurement result #2, for example, includes a receiving quality value of a first beam #1 in a beam group #1 and a receiving quality value of a first beam #2 in a beam group #2. For another example, the third information may include a receiving quality value of a first beam #1 with highest receiving quality in a beam group #1 and a receiving quality value of a first beam #2 with highest receiving quality in a beam group #2. This is not particularly limited in this application.

It may be understood that, in some implementations, the first station may send the third information to the second station once each time a measurement result of one group is obtained starting from obtaining the measurement result #2. For example, the first station measures a beam group #3, to obtain a measurement result #3, and may send, to the second station, the third information indicating the measurement result #3. This is not particularly limited in this application.

In some implementations, the third information may be sent on a communication link #1. A frequency band of the communication link #1 may be lower than a specific threshold. For example, the communication link #1 may be referred to as a low frequency communication link. Therefore, in this embodiment of this application, a low frequency technology (for example, a low Wi-Fi frequency) may be used to assist in beam alignment in a high frequency communication system (for example, an IMMW communication system), thereby improving beam alignment efficiency. Details are not described below.

S802b: The second station determines, based on the third information, whether to determine a target beam and whether to stop beam measurement.

A manner in which the second station determines whether to stop beam measurement and determines the target beam is similar to that described in step S801a. Details are not described herein.

S803b: The second station sends second information #2 to the first station. Correspondingly, the first station receives the second information #2 from the second station.

The second information #2 indicates that beam measurement is stopped. Therefore, the first station may stop measurement of the first beam based on the second information #2. Therefore, beam training overheads in a beam alignment process can be reduced.

In some implementations, the second information #2 may indicate the target beam. For example, the target beam is a reception beam of the first station, and the second information #2 may indicate an identifier of the target beam, so that the first station may implement beam alignment based on the identifier of the target beam.

The foregoing describes a manner in which the first station and the second station perform beam measurement in a grouping manner to determine the target beam. For ease of understanding this embodiment of this application, the following describes a grouping manner in which the N first beams are grouped into the L beam groups.

It may be understood that the first station and/or the second station may group the N first beams into the L beam groups. The following mainly uses an example in which the second station groups the N first beams into the L beam groups for description.

FIG. 9 is a schematic flowchart of a method for grouping N first beams into L beam groups according to an embodiment of this application. The method includes step S901 and step S902. If the N first beams are preconfigured, step S901 may not be performed.

Optionally, in S901, a second station determines the N first beams.

S902: The second station determines L beam groups.

The second station may determine the N first beams in a plurality of manners. The following first describes step S901.

A first manner of determining the N first beams is as follows.

The N first beams are beams in a target space, and the second station may determine the N first beams by determining the target space. In this embodiment, the first station may measure the beams in the target space, instead of measuring all beams in an entire coverage range, so that beam training overheads caused by beam alignment can be reduced.

The second station may determine the target space based on location information of the second station and location information of the first station.

A shape of the target space may be related to a manner of obtaining the location information. For example, if the location information includes 3-D location information, for example, includes a relative azimuth angle and a relative elevation between the second station and the first station, the second station may determine a cone-shaped target space based on the relative azimuth angle and the relative elevation. When the target beam is a transmission beam of the second station, a vertex of the cone is at a location of the second station. For simplicity, in this embodiment of this application, a direction from a vertex of an elliptic cone to a bottom surface center is referred to as a first direction. In this case, the first direction is a direction from the second station to the first station. When the target beam is a reception beam of the first station, a vertex of the cone is at a location of the first station, and the first direction is a direction from the first station to the second station.

A manner in which the first station and the second station obtain the location information is not specifically limited in this application. The first station and the second station may perform obtaining by using a plurality of positioning technologies. For example, the first station and the second station may obtain the location information by using a GPS and a sensor. Alternatively, the first station and the second station may obtain the location information by using channel state information (channel state information, CSI), for example, obtain the location information of the first station and the location information of the second station by measuring a reference signal to obtain an angle of arrival (angle of arrival, AOA) or time of flight (time of flight, TOF) of a signal. Alternatively, the first station and the second station may obtain the location information by using a fine time measurement (fine timing measurement, FTM) technology. For brevity, details are not described herein.

It may be understood that the second station may determine the vertex of the cone and the first direction based on the location information. A cone angle of the cone may be determined based on accuracy of the location information. For example, the location information may be obtained in the following two positioning modes: a CSI positioning mode and a GPS positioning mode. Accuracy of the location information obtained based on the CSI positioning mode is generally higher than that of the location information obtained based on the GPS positioning mode. When the location information is obtained based on the CSI positioning mode, the cone angle of the target space may be a smaller value. When the location information is obtained based on the GPS positioning mode, the cone angle of the target space may be a larger value. This is not particularly limited in this application.

For another example, if the location information includes 2-D location information, for example, a relative azimuth angle (not including elevation information) of the first station of the second station, the second station may determine an elliptic cone-shaped target space based on the relative azimuth angle. When the target beam is a transmission beam of the second station, a vertex of the elliptic cone is at a location of the second station. For ease of description, a direction from the vertex of the elliptic cone to a bottom surface center is still referred to as a first direction. In this case, the first direction is a direction from the second station to the first station. When the target beam is a reception beam of the first station, a vertex of the elliptic cone is at a location of the first station, and the first direction is a direction from the first station to the second station.

It may be understood that the second station may determine the vertex of the elliptic cone and the first direction based on the location information. An opening angle of the elliptic cone in a horizontal direction may be determined based on accuracy of the location information. A description of a determining manner is similar to the foregoing description of the cone angle of the cone. For brevity, details are not described again. An opening angle of the elliptic cone in a vertical direction may be determined according to a predetermined rule. For example, the opening angle in the vertical direction may be set to be greater than or equal to a specific threshold, to cover an elevation that may occur in a communication scenario.

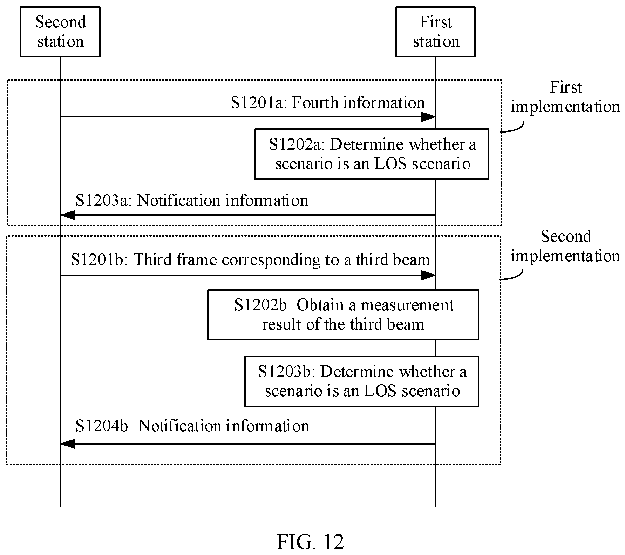

It should be noted that, in the cone-shaped target space or the elliptic cone-shaped target space, the second station determines the first direction based on the location information of the second station and the location information of the first station. This manner is applicable to an LOS scenario in which there is no obstacle between the second station and the first station. In other words, when determining that the second station and the first station are in the LOS scenario, the second station may determine the target space in the first manner. When the second station and the first station are in an NLOS scenario in which there is an obstacle, the second determining manner and the third determining manner described below may be used. For a method for determining the LOS scenario and the NLOS scenario, refer to the following description in FIG. 12. Details are not described herein.

A second manner of determining the N first beams is as follows.

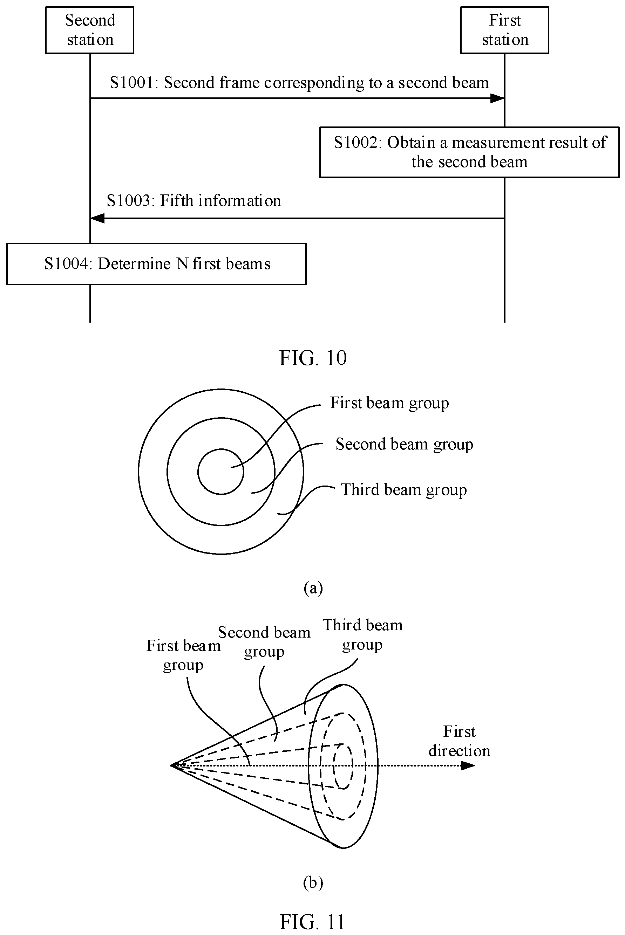

Before determining the target beam, the second station may obtain a measurement result of a second beam with a wider lobe width, to determine a target space in which the target beam is located. In this manner, a quantity of first beams measured by the first station can be reduced, to reduce beam training overheads in a beam alignment process. This process may be referred to as a hierarchical scanning process. For ease of understanding this embodiment, the following describes the hierarchical scanning process by using an example with reference to FIG. 10.

For example, FIG. 10 is a schematic flowchart of determining N first beams through hierarchical scanning according to an embodiment of this application. The manner may include step S1001 to step S1004.

S1001: A second station sends, to a first station, M second frames corresponding to M second beams. Correspondingly, the first station measures the M second beams.

A lobe width of the M second beams is greater than a lobe width of a first beam, and M is a positive integer greater than 1. It may be understood that when the first beam is a transmission beam of the second station, the second beam is a transmission beam of the second station. When the first beam is a reception beam of the first station, the second beam is a reception beam of the first station.

For example, the second station may send a second frame in a coverage range through a plurality of second beams, or the first station may receive a second frame in a coverage range through a plurality of second beams. It may be understood that the lobe width of the second beam is greater than the lobe width of the first beam, and a quantity of second beams measured in a same coverage range is less than a quantity of first beams. Therefore, in this implementation, a smaller quantity of second beams can be measured to reduce a quantity of to-be-measured first beams, and beam training overheads in a beam alignment process can be reduced.

S1002: The first station obtains a measurement result of the second beam.

The measurement result of the second beam may indicate receiving quality of the second beam. The first station may measure one or more of the following content of the second beam: an RSSI and an SNR. For a description of the measurement manner, refer to the foregoing description of measuring the first beam in step S603 in FIG. 6. Details are not described herein.

S1003: The first station sends fifth information to the second station. Correspondingly, the second station receives the fifth information from the first station.

The first station may generate the fifth information based on measurement results of the M second beams. For example, the fifth information includes the measurement results of the M second beams, for example, includes receiving quality values of the M second beams and corresponding beam identification information (ID). For another example, the fifth information may indicate first S second beams with highest receiving quality in the M second beams. For example, the fifth information includes identification information of the S second beams, and optionally may further include receiving quality values of the S second beams. This is not particularly limited in this application.

S1004: The second station determines the N first beams based on the fifth information.

The second station may determine a target space based on the fifth information, and the N first beams are beams in the target space. For example, the second station may obtain the measurement results of the M second beams, and determine first S second beams with highest receiving quality in the M second beams, where the target space is determined based on a space to which the S second beams belong, and M and S are positive integers.

It may be understood that a shape of the target space determined in the second manner may be a cone shape, an elliptic cone shape, or another shape determined by the second beam. This is not particularly limited in this application. For example, if the second station determines the cone-shaped target space or the elliptic cone-shaped target space, a first direction may be a direction of a second beam with highest receiving quality in the S second beams. An opening angle of the cone or the elliptic cone may be determined based on an included angle between a direction of a second beam with lowest receiving quality in the S second beams and the direction of the second beam with highest receiving quality.

It may be further understood that, because the second manner of determining the N first beams is determining based on the measurement result of the second beam, this manner may be applied to both an LOS scenario and an NLOS scenario.

A third manner of determining the N first beams is as follows.

The second station may determine a target space based on one or more of the following information: historical data of communication between the second station and the first station, historical beam alignment directions of the second station and the first station, a type of the second station, a type of the first station, or an environment of communication between the second station and the first station. The second station may obtain the foregoing information through various channels. For example, the foregoing information may be stored in the second station. For another example, the second station may obtain the foregoing information in real time. This is not particularly limited in this application. For ease of description, the foregoing information is collectively referred to as prior information below, and the name does not constitute any special limitation on this application.

For example, the second station may determine, based on the prior information, estimated receiving quality of a beam in a coverage range, and determine the N first beams based on the estimated receiving quality. For example, beams whose estimated receiving quality is higher than a threshold #1 are the N first beams. The second station may estimate the receiving quality of the beam based on the prior information in a plurality of manners. For example, the second station may determine a direction from the first station to the second station based on location information of the second station and location information of the first station. A smaller included angle between a beam and the direction indicates higher estimated receiving quality of the beam. For another example, the second station may analyze the historical data of communication between the second station and the first station, for example, data link quality of historical communication, by using a tool, for example, AI, to estimate the receiving quality of the beam in the coverage range. For another example, the second station obtains the historical beam alignment directions of the second station and the first station. A beam with a higher occurrence frequency in historical communication indicates higher estimated receiving quality of the beam. For another example, the second station determines a confidence level of estimated receiving quality based on the type of the second station and the type of the first station. For example, if the second station and the first station are stations of an AP type that do not move frequently, the second station may consider that the confidence level of the estimated receiving quality is high. For another example, the second station determines estimated receiving quality based on the environment of communication between the second station and the first station. For example, if the second station and the first station are in a communication environment of LOS, the second station may perform estimation in a manner similar to estimating the receiving quality based on the location information. For another example, the second station may obtain complex communication environment information by using a sensing method (for example, radio sensing), and determine the N first beams in the target space based on the communication environment information. This is not particularly limited in this application.

It may be understood that, because the third manner of determining the N first beams is determining based on the prior information, this manner may be applied to both an LOS scenario and an NLOS scenario.

The foregoing describes a manner in which the second station determines the N first beams, and the following describes a manner in which the second station determines the L beam groups.

The second station may determine the L beam groups based on the N first beams in a plurality of manners.

In a first possible implementation, the second station determines the N first beams by determining the target space, the target space may be divided into L subspaces, and the L beam groups respectively include beams in the L subspaces. For example, the target space is a cone, where the cone is divided into the L subspaces by L-1 cone surfaces, a vertex of the L-1 cone surfaces is located at a vertex of the cone, opening angles of the L-1 cone surfaces increase sequentially, and a 1^{st} subspace in the L subspaces is a cone enclosed by a 1^{st} cone surface in the L-1 cone surfaces, a j^{th} subspace in the L subspaces is a space enclosed by a j^{th} cone surface and a (j-1)^{th} cone surface in the L-1 cone surfaces, and j≥2. It may be understood that a division manner in which the target space is an elliptic cone is similar to the foregoing described cone division manner. Details are not described. For ease of understanding embodiments of this application, the following describes a cone division manner as an example with reference to FIG. 11.

For example, FIG. 11 is a diagram of a grouping manner of L beam groups according to an embodiment of this application. Refer to FIG. 11. An example in which L is equal to 3 is used. (a) in FIG. 11 is a diagram of a bottom surface of a cone, and (b) in FIG. 11 is a three-dimensional diagram of the cone. A corresponding first beam in a 1^{st} subspace is a first beam group, a corresponding first beam in a 2^{nd} subspace is a second beam group, and a corresponding first beam in a 3^{rd} subspace is a third beam group.

In a second possible implementation, the second station determines the N first beams based on the estimated receiving quality, and the second station may sort the N first beams in descending order of the estimated receiving quality, and group the N first beams into the L beam groups in sequence. For example, a first specific quantity of beams with highest receiving quality is estimated as a first beam group, and then a second beam group is successively obtained until grouping is completed.

In a third possible implementation, the second station determines the L beam groups based on the measurement result, and a k^{th} beam group in the L beam groups is determined based on a measurement result of at least one beam group in first (k-1) beam groups in the L beam groups. For example, the second station may determine a first beam group based on the prior information, and send a first frame corresponding to the first beam group to the first station, and the first station may return a measurement result of the first beam group to the second station. The second station determines a second beam group based on the measurement result of the first beam group, and indicates the first station to start measurement of the second beam group. The rest may be deduced by analogy. Details are not described.

The foregoing describes a manner in which the second station groups the N first beams into the L beam groups. It may be understood that, in the foregoing described example, a probability that the target beam appears in a beam group that is arranged in front is higher than a probability that the target beam appears in a beam group that is arranged in back. In other words, a probability that the target beam appears in the first beam group is the highest, and a probability that the target beam appears in a subsequent beam group decreases sequentially. This is because for the first division manner (division is performed on the target space), a probability that a space with a smaller included angle with the first direction includes the target beam is higher. For the second division manner (division is performed based on the estimated receiving quality), a probability that a beam with higher estimated receiving quality is the target beam is higher. In other words, the probability that the L beam groups include the target beam decreases sequentially. If the first station determines that quality of all first beams #2 in the beam group #2 is not higher than quality of a first beam #1 with highest quality in the beam group #1, the beam group #2 does not include the target beam. In this case, it may be considered that a subsequent beam group with a lower probability does not include the target beam. Therefore, the first station may select the target beam from the beam group #1.

It should be noted that, in the foregoing description of the manner of determining the N first beams, the first manner of determining the N first beams (determining based on the location information) may be applied to an LOS communication scenario. In other words, in some implementations, the first station may directly determine the N first beams in the second manner or the third manner without determining the LOS communication scenario and the NLOS communication scenario. In some other implementations, when determining that the scenario is the LOS communication scenario, the first station may determine the N first beams in the first manner, or when determining that the scenario is the NLOS communication scenario, determine the N first beams in the second manner or the third manner.

For ease of understanding embodiments of this application, the following describes manners of determining the LOS communication scenario and the NLOS communication scenario with reference to FIG. 12.

FIG. 12 is a schematic flowchart of a method for determining whether a scenario is an LOS communication scenario according to an embodiment of this application.

It should be noted that, similarly, a first station may determine whether the first station and a second station are in an LOS scenario or an NLOS scenario, and may further indicate a determining result to the second station. Alternatively, a second station may determine whether a first station and the second station are in an LOS scenario or an NLOS scenario, and may further indicate a determining result to the first station. This is not particularly limited in this application. For ease of description, the following describes an example in which the first station determines whether the first station and the second station are in the LOS scenario or the NLOS scenario. The first station may determine, in at least the following two manners, whether the first station and the second station are in the LOS scenario or the NLOS scenario.

In a first implementation, the manner may include steps S1201a to S1203a.

S1201a: The second station sends fourth information to the first station. Correspondingly, the first station receives the fourth information from the second station.

The fourth information is used to determine whether the first station and the second station are in the LOS scenario.

The fourth information used to determine whether the scenario is the LOS scenario may be any one or more pieces of information. That is, the first station and the second station may reuse any one or more pieces of information, for example, information used for positioning, to determine whether the first station and the second station are in the LOS scenario or the NLOS scenario. In this way, transmission consumption can be reduced.

In some implementations, the fourth information may be sent on a communication link #1. A frequency band of the communication link #1 may be lower than a specific threshold. For example, the communication link #1 may be referred to as a low frequency communication link. Therefore, in this embodiment of this application, a low frequency technology (for example, a low Wi-Fi frequency) may be used to assist in beam alignment in a high frequency communication system (for example, an IMMW communication system), thereby improving beam alignment efficiency. Details are not described below.

S1202a: The first station determines, based on the fourth information, whether the first station and the second station are in the LOS scenario.

The second station sends the fourth information to the first station, and the first station may process the received fourth information to obtain a shortest path signal component of the fourth information. For example, the first station may determine whether the first station and the second station are in the LOS scenario or the NLOS scenario by comparing the shortest path signal component with another path component. For example, if strength of the shortest path component is greater than or equal to strength of the another path component, the first station may determine that the first station and the second station are in the LOS scenario. If strength of the shortest path component is less than strength of the another path component, the first station may determine that the first station and the second station are in the NLOS scenario.

Optionally, in S1203a, the first station sends notification information to the second station. Correspondingly, the second station receives the notification information from the first station.

The notification information indicates whether the first station and the second station are in the LOS scenario or the NLOS scenario.

In some implementations, the notification information may be sent on a communication link #1. A frequency band of the communication link #1 may be lower than a specific threshold. For example, the communication link #1 may be referred to as a low frequency communication link. Therefore, in this embodiment of this application, a low frequency technology (for example, a low Wi-Fi frequency) may be used to assist in beam alignment in a high frequency communication system (for example, an IMMW communication system), thereby improving beam alignment efficiency. Details are not described below.

The foregoing describes a method for determining, based on the path signal component of the fourth information, whether the first station and the second station are in the LOS scenario. The fourth information may be sent on a low frequency communication link. The following provides a manner of determining, based on beam measurement, whether the scenario is the LOS scenario.

In a second implementation, the manner may include steps S1201b to S1204b.

S1201b: The second station sends, to the first station, a third frame corresponding to a third beam. Correspondingly, the first station measures the third beam.

A direction of the third beam is determined based on location information of the first station and location information of the second station. For example, the third beam is a transmission beam of the second station, and the direction of the third beam is a direction from the second station to the first station; or the third beam is a reception beam of the first station, and the direction of the third beam is a direction from the first station to the second station.

In some implementations, the third information may be sent on the communication link #2. A frequency band of the communication link #2 may be higher than a specific threshold. For example, the communication link #1 may be referred to as a high-frequency communication link, and the third frame is an IMMW frame.

S1202b: The first station obtains a measurement result of the third beam.

The measurement result of the third beam may indicate receiving quality of the third beam. The first station may measure one or more of the following content of the third beam: an RSSI and an SNR. For a description of the measurement manner, refer to the foregoing description of measuring the first beam in step S603 in FIG. 6. Details are not described herein.

S1203b: The first station determines, based on the measurement result of the third beam, whether the first station and the second station are in the LOS scenario.

For example, the first station may determine the receiving quality of the third beam based on the measurement result of the third beam. When the receiving quality of the third beam is greater than or equal to a specific threshold, the first station determines that the first station and the second station are in the LOS scenario; or when the receiving quality of the third beam is less than a specific threshold, the first station determines that the first station and the second station are in the NLOS scenario.

Optionally, in S1204b, the first station sends notification information to the second station. Correspondingly, the second station receives the notification information from the first station.

The notification information indicates whether the first station and the second station are in the LOS scenario or the NLOS scenario.

It may be understood that, for brevity, the foregoing uses an example in which the first station determines whether the scenario is LOS is used for description. This is not particularly limited in this application. For example, in the foregoing first manner, the first station may also perform determining based on any one or more pieces of received information. For another example, in the foregoing second manner, the first station may perform determining based on the measurement result of the third beam, or the first station may send the beam used for measurement to the second station, and the second station performs determining based on the measurement result. Details are not described.

Based on this technical solution, in a beam alignment process, the first station does not perform exhaustive and undifferentiated beam measurement, but groups to-be-measured beams, and determines a target beam and stopping of beam measurement based on a measurement result of a beam group. In other words, because the to-be-measured beams are grouped into a plurality of beam groups, the first station can determine, in a measurement process, whether beam measurement can be stopped. If the first station determines, in the measurement process, that beam measurement can be stopped, the first station may not continue to measure a remaining to-be-measured beam, thereby reducing beam training overheads in a beam alignment process.

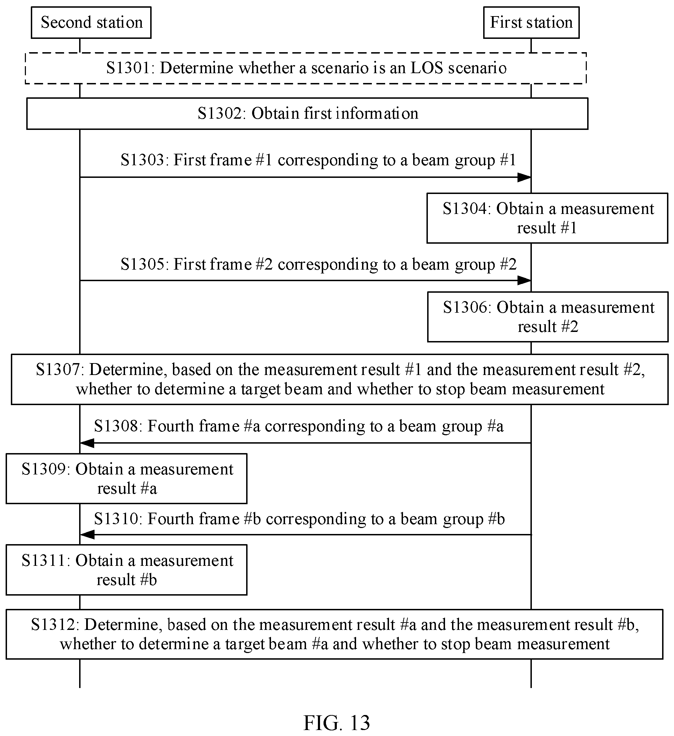

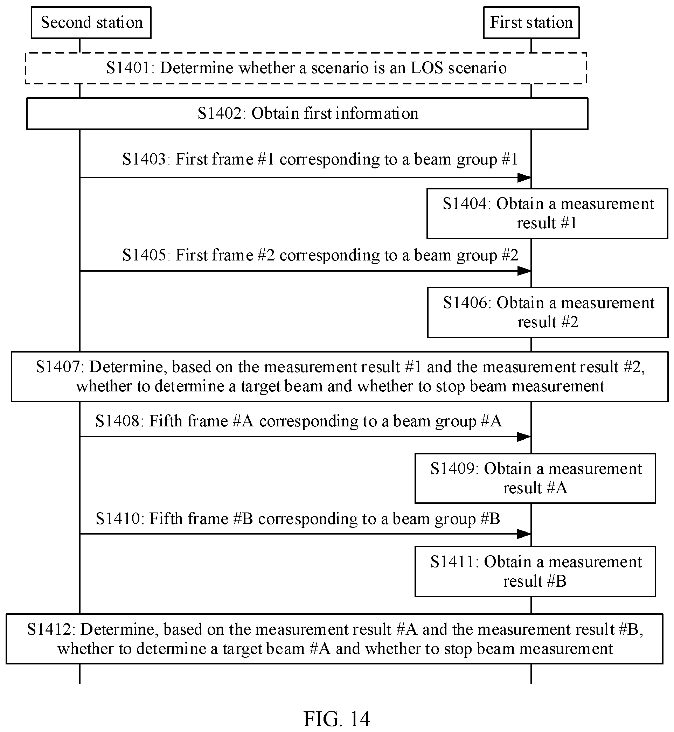

It may be understood that the communication methods described in FIG. 4 to FIG. 12 include the method for generating and sending the first information, the method for determining whether to stop beam measurement, the method for determining the target beam (the transmission beam of the second station or the reception beam of the first station), the method for determining the N first beams, the method for grouping the L beam groups, and the method for determining whether the scenario is LOS scenario. Any one of the methods may be independently implemented, and any plurality of methods may be combined for implementation. For example, in addition to assisting in selecting the proper beam alignment solution, selecting the manner of determining the N first beams, and selecting the grouping manner, determining whether the scenario is LOS may be further applied to a plurality of high frequency or millimeter wave communication scenarios, for example, searching for an AP with LOS between the AP and a STA in a multi-AP scenario, searching for a STA with LOS between an AP and the STA in a multi-user scenario, determining whether a high frequency or millimeter wave relay is enabled, and beam tracking, recovery, and fast determining whether to maintain a beam in a high frequency or millimeter wave communication process. For ease of understanding embodiments of this application, the following FIG. 13 and FIG. 14 provide two combined implementations. For detailed descriptions of related content in FIG. 13 and FIG. 14, refer to the foregoing descriptions. Details are not described.

FIG. 13 is a schematic flowchart of a communication manner according to an embodiment of this application. It should be noted that, in the manner described in FIG. 13, a first station and a second station may perform a procedure of measuring two beams, to determine a pair of beams as target beams used for communication. For example, in the following, a beam group #1, a beam group #2, and the like are obtained by grouping transmission beams of the second station, and a beam group #a, a beam group #b, and the like are obtained by grouping transmission beams of the first station.

S1301: The first station and/or the second station determine/determines whether the first station and the second station are in an LOS scenario.

For description of this step, refer to the description of FIG. 12. Details are not described herein.

S1302: The first station and/or the second station obtain/obtains first information.

For description of this step, refer to the description of FIG. 5, FIG. 6, and FIG. 9 to FIG. 11. It may be understood that this step is performed by using the sending manner shown in FIG. 6 as an example. This step may also be replaced with the sending manner shown in FIG. 7. This is not particularly limited in this application.

S1303: The second station sends, to the first station, a first frame #1 corresponding to the beam group #1. Correspondingly, the first station measures the beam group #1.

In some implementations, the beam group #1 includes the transmission beam of the second station, and the first station receives L1 first frames #1 in a specific direction. The specific direction may be preconfigured, or may be determined by the first station based on prior information, for example, determined in a manner similar to the foregoing manner of determining the first direction. In other words, the first station may not need to traverse a plurality of receiving directions to receive the L1 first frames #1, thereby further reducing beam training overheads in a beam alignment process. Receiving the fourth frame in the following is similar to the foregoing. Details are not described.

S1304: The first station obtains a measurement result #1.

S1305: The second station sends, to the first station, a first frame #2 corresponding to the beam group #2. Correspondingly, the first station measures the beam group #2.

S1306: The first station obtains a measurement result #2.

S1307: The first station or the second station determines, based on the measurement result #1 and the measurement result #2, whether to determine the target beam, and determines whether to stop beam measurement.

For descriptions of steps S1303 to S1307, refer to the description in FIG. 6. Details are not described herein.

It may be understood that step S1301 to step S1307 are used to determine the transmission beam of the second station for beam alignment. The first station and the second station may further perform the following steps to determine the transmission beam of the first station for beam alignment. In the following, beam groups obtained by grouping the beam are marked as a beam group #a, a beam group #b, and the like, corresponding frames are marked as a fourth frame #a, a fourth frame #b, and the like, corresponding measurement results are marked as a measurement result #a, a measurement result #b, and the like, and a determined beam is marked as a target beam #a.

It may be understood that in the following step, the second station may receive the fourth frame through the target beam determined in step S1307.

S1308: The first station sends, to the second station, the fourth frame #a corresponding to the beam group #a. Correspondingly, the second station measures the beam group #a.

S1309: The second station obtains the measurement result #a.

S1310: The first station sends, to the second station, the fourth frame #b corresponding to the beam group #b. Correspondingly, the second station measures the beam group #b.

S1311: The second station obtains the measurement result #b.

S1312: The first station or the second station determines, based on the measurement result #a and the measurement result #b, whether to determine the target beam #a, and determines whether to stop beam measurement.

Based on this technical solution, in a beam alignment process, the first station does not perform exhaustive and undifferentiated beam measurement, but groups to-be-measured beams, and determines a target beam and stopping of beam measurement based on a measurement result of a beam group. In other words, because the to-be-measured beams are grouped into a plurality of beam groups, the first station can determine, in a measurement process, whether beam measurement can be stopped. If the first station determines, in the measurement process, that beam measurement can be stopped, the first station may not continue to measure a remaining to-be-measured beam, thereby reducing beam training overheads in a beam alignment process.

FIG. 14 is a schematic flowchart of another communication manner according to an embodiment of this application. It should be noted that, in the manner described in FIG. 14, a first station and a second station may perform a procedure of measuring two beams, to determine a pair of beams as target beams used for communication. For example, in the following, a beam group #1, a beam group #2, and the like are obtained by grouping transmission beams of the second station, and a beam group #A, a beam group #B, and the like are obtained by grouping reception beams of the first station.

S1401: The first station and/or the second station determine/determines whether the first station and the second station are in an LOS scenario.

For description of this step, refer to the description of FIG. 12. Details are not described herein.

S1402: The first station and/or the second station obtain/obtains first information.

For description of this step, refer to the description of FIG. 5, FIG. 6, and FIG. 9 to FIG. 11. It may be understood that this step is performed by using the sending manner shown in FIG. 6 as an example. This step may also be replaced with the sending manner shown in FIG. 7. This is not particularly limited in this application.

S1403: The second station sends, to the first station, a first frame #1 corresponding to the beam group #1. Correspondingly, the first station measures the beam group #1.

S1404: The first station obtains a measurement result #1.

S1405: The second station sends, to the first station, a first frame #2 corresponding to the beam group #2. Correspondingly, the first station measures the beam group #2.

S1406: The first station obtains a measurement result #2.

S1407: The first station or the second station determines, based on the measurement result #1 and the measurement result #2, whether to determine the target beam, and determines whether to stop beam measurement.

For descriptions of steps S1403 to S1407, refer to the description in FIG. 6. Details are not described herein.

It may be understood that step S1401 to step S1407 are used to determine the transmission beam of the second station for beam alignment. The first station and the second station may further perform the following steps to determine the reception beam of the first station for beam alignment. In the following, beam groups obtained by grouping the beam are marked as a beam group #A, a beam group #B, and the like, corresponding frames are marked as a fifth frame #A, a fifth frame #B, and the like, corresponding measurement results are marked as a measurement result #A, a measurement result #B, and the like, and a determined beam is marked as a target beam #A.

S1408: The second station sends, to the first station, the fifth frame #A corresponding to the beam group #A. Correspondingly, the first station measures the beam group #A.

It may be understood that in this step, the second station may send the fifth frame #A through the target beam determined in step S1407.

S1409: The first station obtains the measurement result #A.

S1410. The second station sends, to the first station, the fifth frame #B corresponding to the beam group #B. Correspondingly, the second station measures the beam group #B.

S1411: The first station obtains the measurement result #B.

S1412: The first station or the second station determines, based on the measurement result #A and the measurement result #B, whether to determine the target beam #A, and determines whether to stop beam measurement.

In some implementations, if the first station makes a decision based on the measurement result, and if an alignment condition is met, beam measurement may be directly stopped, local beam alignment is directly performed based on the determined beam, and the second station is notified that beam alignment is completed and the fifth frame is stopped to be sent.

Based on this technical solution, in a beam alignment process, the first station does not perform exhaustive and undifferentiated beam measurement, but groups to-be-measured beams, and determines a target beam and stopping of beam measurement based on a measurement result of a beam group. In other words, because the to-be-measured beams are grouped into a plurality of beam groups, the first station can determine, in a measurement process, whether beam measurement can be stopped. If the first station determines, in the measurement process, that beam measurement can be stopped, the first station may not continue to measure a remaining to-be-measured beam, thereby reducing beam training overheads in a beam alignment process.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the first station and the second station) may alternatively be implemented by a component (for example, a chip or a circuit) of the device.

It may be further understood that, some optional features in embodiments of this application may be independent of other features in some scenarios, or may be combined with other features in some scenarios. This is not limited.

The foregoing describes in detail the communication method provided in embodiments of this application with reference to FIG. 4 to FIG. 14. The foregoing communication method is mainly described from perspectives of the first station and the second station. It may be understood that, to implement the foregoing functions, the first station and the second station include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

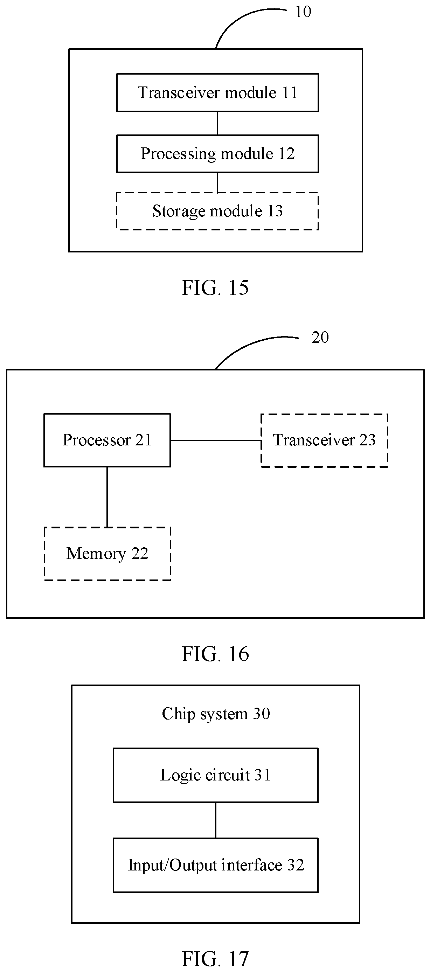

The following describes in detail the communication apparatus provided in embodiments of this application with reference to FIG. 15 and FIG. 17. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 15 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the first station in the foregoing method embodiment, or may be a component (for example, a chip) of the first station.

The apparatus 10 may implement corresponding steps or procedures performed by the first station in the foregoing method embodiment. The transceiver module 11 may be configured to perform receiving and sending-related operations of the first station in the foregoing method embodiment, and the processing module 12 may be configured to perform a processing-related operation of the first station in the foregoing method embodiment.

It should be understood that a specific process in which the units perform the foregoing corresponding steps is described in detail in the foregoing method embodiments, and for brevity, details are not described herein.

In another design, the apparatus 10 may correspond to the second station in the foregoing method embodiment, or may be a component (for example, a chip) of the second station.

The apparatus 10 may implement corresponding steps or procedures performed by the second station in the foregoing method embodiment. The transceiver module 11 may be configured to perform receiving and sending-related operations of the second station in the foregoing method embodiment, and the processing module 12 may be configured to perform a processing-related operation of the second station in the foregoing method embodiment.

It should be understood that a specific process in which the units perform the foregoing corresponding steps is described in detail in the foregoing method embodiments, and for brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first station) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 16 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 16, the apparatus 20 further includes the memory 22. The memory 22 is configured to store the computer program or instructions and/or data. The memory 22 and the processor 21 may be integrated together, or may be disposed separately. Optionally, there are one or more memories 22.

Optionally, as shown in FIG. 16, the apparatus 20 further includes a transceiver 23. The transceiver 23 is configured to receive a signal and/or send a signal. For example, the processor 21 is configured to control the transceiver 23 to receive and/or send a signal.

In a solution, the apparatus 20 is configured to implement operations performed by the first station or the second station in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 17 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first station or the second station in the foregoing method embodiments.

For example, the logic circuit 31 is configured to implement processing-related operations performed by the first station or the second station in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is enabled to implement the methods performed by the first station or the second station in the foregoing method embodiments.

An embodiment of this application further provides a computer program product, including instructions. When the instructions are executed by a computer, the methods performed by the first station or the second station in the foregoing method embodiments are implemented.

An embodiment of this application further provides a communication system, including the first station and the second station.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam alignment method, wherein the method is applied to a first station, and the method comprises:
obtaining first information, wherein the first information indicates a first beam group and a second beam group; and
obtaining a first measurement result of the first beam group and a second measurement result of the second beam group based on the first information, wherein the first measurement result and the second measurement result are used to determine a target beam used for beam alignment, and are further used to determine stopping of beam measurement.

2. The method according to claim 1, wherein the first measurement result indicates receiving quality of a first beam in the first beam group, and the second measurement result indicates receiving quality of a first beam in the second beam group; and
when receiving quality of all first beams in the second beam group is not higher than receiving quality of a first beam with highest quality in the first beam group, beam measurement is stopped, wherein the first beam group and the second beam group comprise the target beam.

3. The method according to claim 1 or 2, wherein the method further comprises:
sending second information, wherein the second information indicates that beam measurement is stopped.

4. The method according to claim 1 or 2, wherein the method further comprises:
sending third information based on the first measurement result and the second measurement result, wherein the third information is used to determine the target beam used for beam alignment, and is further used to determine stopping of beam measurement.

5. The method according to any one of claims 1 to 4, wherein the first beam group and the second beam group are obtained through grouping based on one or more of the following information: location information of the first station, location information of a second station, historical data of communication between the first station and the second station, historical beam alignment directions of the first station and the second station, a type of the first station, a type of the second station, or an environment of communication between the first station and the second station, wherein the target beam is used for beam alignment between the first station and the second station.

6. The method according to any one of claims 1 to 5, wherein the first beam group and the second beam group are beam groups in L beam groups, and the L beam groups are obtained by grouping N first beams.

7. The method according to any one of claims 1 to 6, wherein the first information indicates one or more of the following: a manner of grouping the N first beams into the L beam groups, identifiers of the L beam groups, identifiers of the N first beams, a mapping relationship between the identifiers of the L beam groups and the identifiers of the N first beams, a value of L, measurement duration of the L beam groups, measurement duration of a last beam group in the L beam groups, measurement start time of the L beam groups, whether the first station and the second station are in a line-of-sight LOS scenario, whether the N first beams are grouped into the L beam groups, whether to feed back measurement results of the L beam groups, types of the fed-back measurement results of the L beam groups, and whether to enable transmission on a first communication link, wherein the L beam groups are transmitted on the first communication link, and a frequency band on which the first communication link operates is higher than or equal to a first threshold.

8. The method according to any one of claims 1 to 6, wherein the first information indicates the first station to start measurement of the first beam group and measurement of the second beam group.

9. The method according to any one of claims 6 to 8, wherein the N first beams are beams in a target space, the target space is divided into L subspaces, and the L beam groups respectively comprise beams in the L subspaces.

10. The method according to claim 9, wherein the target space is a cone, and when the N first beams are transmission beams of the second station, a vertex of the cone is located at the second station, or when the N first beams are reception beams of the first station, a vertex of the cone is located at the first station; and
the cone is divided into the L subspaces by L-1 cone surfaces, wherein a vertex of the L-1 cone surfaces is located at the vertex of the cone, opening angles of the L-1 cone surfaces increase sequentially, a 1^{st} subspace in the L subspaces is a cone enclosed by a 1^{st} cone surface in the L-1 cone surfaces, a j^{th} subspace in the L subspaces is a space enclosed by a j^{th} cone surface and a (j-1)^{th} cone surface in the L-1 cone surfaces, and j≥2.

11. The method according to any one of claims 6 to 10, wherein a k^{th} beam group in the L beam groups is determined based on a measurement result of at least one beam group in first k-1 beam groups in the L beam groups, wherein k≥2.

12. The method according to any one of claims 6 to 11, wherein the N first beams are determined based on one or more of the following information: the location information of the first station, the location information of the second station, the historical data of communication between the first station and the second station, the historical beam alignment directions of the first station and the second station, the type of the first station, the type of the second station, or the environment of communication between the first station and the second station.

13. The method according to any one of claims 6 to 12, wherein the N first beams are the beams in the target space, and the target space is the cone or an elliptic cone; and
when the N first beams are the transmission beams of the second station, a vertex of the target space is located at the second station, and a direction from the vertex of the target space to a bottom surface center is a direction from a location of the second station to a location of the first station; or
when the N first beams are the reception beams of the first station, a vertex of the target space is located at the first station, and a direction from the vertex of the target space to a bottom surface center is a direction from a location of the first station to a location of the second station.

14. The method according to claim 13, wherein the first station and the second station are in the line-of-sight LOS scenario.

15. The method according to any one of claims 6 to 12, wherein the method further comprises:
obtaining third measurement results of M second beams, wherein the third measurement results indicate first S second beams with highest receiving quality in the M second beams, the N first beams are the beams in the target space, the target space is determined based on a space to which the first S second beams belong, and a lobe width of the second beam is greater than a lobe width of the first beam.

16. The method according to any one of claims 1 to 15, wherein the method further comprises:
receiving fourth information, and determining, based on a shortest path signal component of the fourth information, whether the first station and the second station are in the line-of-sight LOS scenario.

17. The method according to any one of claims 1 to 15, wherein the method further comprises:
obtaining a fourth measurement result of a third beam, wherein the fourth measurement result is used to determine whether the first station and the second station are in the line-of-sight LOS scenario, the third beam is transmitted on a second communication link, a frequency band on which the second communication link operates is higher than or equal to a second threshold, and a direction of the third beam is a direction from the first station to the second station, or a direction of the third beam is a direction from the second station to the first station.

18. The method according to any one of claims 1 to 17, wherein when a beam in the first beam group is the transmission beam of the second station, a frame corresponding to the beam in the first beam group is directionally received by the first station; or
when a beam in the first beam group is the reception beam of the first station, a frame corresponding to the beam in the first beam group is directionally sent by the second station.

19. A beam alignment method, wherein the method is applied to a second station, and the method comprises:
obtaining first information, wherein the first information indicates a first beam group and a second beam group; and
sending, based on the first information, a first frame corresponding to the first beam group and a first frame corresponding to the second beam group, wherein a first measurement result of the first beam group and a second measurement result of the second beam group are used to determine a target beam used for beam alignment, and are further used to determine stopping of beam measurement.

20. The method according to claim 19, wherein the method further comprises:
receiving second information, wherein the second information indicates that beam measurement is stopped.

21. The method according to claim 19, wherein the method further comprises:
receiving third information, wherein the third information is generated based on the first measurement result and the second measurement result; and
determining the target beam based on the third information, and further determining stopping of beam measurement.

22. The method according to any one of claims 19 to 21, wherein the method further comprises:
sending second frames corresponding to M second beams, wherein third measurement results of the M second beams indicate first S second beams with highest receiving quality in the M second beams, a target space is determined based on a space to which the first S second beams belong, a lobe width of the second beam is greater than a lobe width of the first beam, the first beam group and the second beam group are beam groups in L beam groups, the L beam groups are obtained by grouping N first beams, and the N first beams are beams in the target space.

23. The method according to any one of claims 19 to 22, wherein the method further comprises:
sending fourth information, and receiving a shortest path signal component of the fourth information, to determine whether a first station and the second station are in a line-of-sight LOS scenario.

24. The method according to any one of claims 19 to 22, wherein the method further comprises:
sending a third frame corresponding to a third beam, wherein a fourth measurement result of the third beam is used to determine whether a first station and the second station are in a line-of-sight LOS scenario, the third beam is transmitted on a second communication link, a frequency band on which the second communication link operates is higher than or equal to a second threshold, and a direction of the third beam is a direction from the first station to the second station, or a direction of the third beam is a direction from the second station to the first station.

25. A communication apparatus, comprising a unit configured to perform the method according to any one of claims 1 to 18, or comprising a unit configured to perform the method according to any one of claims 19 to 24.

26. A communication apparatus, comprising:
a processor, configured to execute a computer program stored in a memory, so that the apparatus performs the method according to any one of claims 1 to 18, or the apparatus performs the method according to any one of claims 19 to 24.

27. The apparatus according to claim 26, wherein the apparatus further comprises the memory.

28. A computer-readable storage medium, wherein the computer-readable storage medium stores a computer program, and when the computer program is run on a computer, the computer is enabled to perform the method according to any one of claims 1 to 24.

29. A communication system, comprising a first station and a second station, wherein the first station is configured to perform the method according to any one of claims 1 to 18, and the second station is configured to perform the method according to any one of claims 19 to 24.
